# EUROPÄISCHE PATENTSCHRIFT

(11) **EP 2 608 633 B1**
(45) Veröffentlichungstag und Bekanntmachung des Hinweises auf die Patenterteilung: **26.08.2020**
(21) Anmeldenummer: 11010088.0
(22) Anmeldetag: 22.12.2011
(51) Int. Cl.: H05B 3/50

(54) **Wärme erzeugendes Element**
Element which produces heat
Elément générateur de chaleur

(43) Veröffentlichungstag der Anmeldung: 26.06.2013
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE); Morgen, Christian, 76761 Rülzheim (DE)
(74) Vertreter: Grünecker Patent- und Rechtsanwälte PartG mbB

(56) Entgegenhaltungen:
- EP-A1- 1 580 495
- EP-A1- 2 190 256
- EP-A1- 2 211 589
- EP-A1- 2 393 336
- DE-A1-102010 004 034
- US-A1- 2008 173 637

## Beschreibung

Die vorliegende Erfindung betrifft ein Wärme erzeugendes Element mit den oberbegrifflichen Merkmalen von Anspruch 1 und eine elektrische Heizvorrichtung mit den oberbegrifflichen Merkmalen von Anspruch 3.

Solche Wärme erzeugenden Elemente sind allgemein bekannt als Bestandteil einer elektrischen Heizvorrichtung insbesondere zur Lufterwärmung in einem Kraftfahrzeug, die mit der vorliegenden Erfindung ebenfalls weitergebildet werden soll. Das Wärme erzeugende Element bildet eine Lage eines Schichtaufbaus, welches üblicherweise an beiden Seiten des Wärme erzeugenden Elementes anliegende Wellrippenelemente umfasst. Dieser Schichtaufbau hat üblicherweise eine Mehrzahl von jedenfalls in einer Ebene übereinander geschichteten Lagen von Wellrippenelementen und Wärme erzeugenden Elementen.

Ein gattungsgemäßes Wärme erzeugendes Element ist aus EP 2 190 256 A1 bekannt. Ähnliche Wärme erzeugende Elemente sind aus EP 1 768 457 A1, EP 2 299 200 A1 und EP 1 768 458 A1 bekannt. Die EP 0 350 528 offenbart ein Wärme erzeugendes Element als Teil einer elektrischen Heizvorrichtung zur Lufterwärmung.

Elektrische Heizvorrichtungen umfassend ein Wärme erzeugendes Element der gattungsgemäßen Art führen mitunter zu elektromagnetischen Störungen, die insbesondere innerhalb eines Kraftfahrzeuges sehr unerwünscht sind, da sich diese beispielsweise beim Betrieb eines Radios akustisch im Fahrzeuginnenraum bemerkbar machen.

So liegt der vorliegenden Erfindung das Problem zugrunde, ein Wärme erzeugendes Element insbesondere für eine elektrische Heizvorrichtung für ein Kraftfahrzeug sowie eine elektrische Heizvorrichtung anzugeben, welche in verbesserter Weise der EMV-Problematik Rechnung tragen.

Zur Lösung dieses Problems wird mit der vorliegenden Erfindung ein Wärme erzeugendes Element mit den Merkmalen von Anspruch 1 vorgeschlagen.

Das erfindungsgemäße Wärme erzeugende Element hat in an sich bekannter Weise einen Positionsrahmen. Dieser Positionsrahmen ist üblicherweise aus einem elektrisch nicht leitenden Material hergestellt und bildet zumindest eine, üblicherweise mehrere Aufnahmen für wenigstens ein PTC-Element aus. In einer Aufnahme können auch mehrere PTC-Elemente vorgesehen sein. An gegenüberliegenden Seiten des bzw. der PTC-Elemente liegen Kontaktbleche an, die mit unterschiedlicher Polarität bestromt werden. Solche Kontaktbleche sind üblicherweise durch Stanzen gegebenenfalls Biegen aus einem Blechstreifen gebildet.

Das erfindungsgemäße Wärme erzeugende Element hat zusätzlich eine mit dem Positionsrahmen verbundene Blechabdeckung. Diese Blechabdeckung ist üblicherweise elektrisch isolierend von den beiden Kontaktelementen vorgesehen. Sie kann durch eine Luftstrecke gegenüber dem zugeordneten Kontaktblech isoliert sein, d.h. nicht auf dem Kontaktblech, sondern lediglich dem Positionsrahmen aufliegen. Üblicherweise und insbesondere mit Blick auf eine gute Wärmeübertragung liegt indes die Blechabdeckung mittelbar an dem ihr zugeordneten Kontaktblech an. Eine mittelbare Anlage bedingt regelmäßig die Zwischenschaltung einer Isolierschicht zwischen der Blechabdeckung und dem zugeordneten Kontaktblech. Diese Isolierlage kann aus einer Kunststofffolie und/oder Keramikschicht gebildet sein. Die Isolierlage kann auch durch Aufspritzen von Kunststoff und/oder Keramik auf die Außenfläche des Kontaktbleches und/oder die Innenfläche der Blechabdeckung aufgebracht sein.

Die Blechabdeckung kann auf jede beliebige Art und Weise mit dem Positionsrahmen verbunden sein, beispielsweise durch Umspritzen mit diesen zu einer Einheit verbunden oder aber nachträglich an einem zunächst durch Spritzgießen vorbereiteten Positionsrahmen befestigt werden.

Bei dem erfindungsgemäßen Wärme erzeugenden Element bildet die Blechabdeckung eine Abschirmung für das Wärme erzeugende Element aus. Dementsprechend begründet eine das Wärme erzeugende Element umfassende elektrische Heizvorrichtung im verminderten Maße EMV-Probleme. Es können an gegenüberliegenden Seitenflächen und zu jedem der Kontaktbleche vorzugsweise unter Zwischenlage einer Isolierschicht jeweils daran anliegende Blechabdeckungen vorgesehen sein, so dass das Wärme erzeugende Element an seiner Außenseite insgesamt von Blechen abgedeckt ist. Die Blechabdeckung bildet üblicherweise die Anlagefläche für das bzw. die Wellrippenelemente aus. Als Wellrippenelement im Sinne der vorliegenden Erfindung ist dabei nicht zwingend allein durch einen mäandrierend umbogenen Blechstreifen gegeben. Das Wellrippenelement kann auch als Strangpressprofil aus Aluminium hergestellt sein. Die einzelnen Stege eines solchen Profils bilden Wellrippen des besagten Wellrippenelementes aus.

Gemäß der vorliegenden Erfindung hat die Blechabdeckung einen den Positionsrahmen im Wesentlichen vollumfänglich umgebenden Rand. Dieser Rand erstreckt sich üblicherweise über die gesamte Höhe des Positionsrahmen, d.h. bis zu oder gar über die Ebene, die durch das an der gegenüberliegenden Seite angeordnete Kontaktblech definiert ist. Dies gilt jedenfalls für den Fall, bei dem auch der dem Kontaktblech mit dem umfänglich umgebenen Rand gegenüberliegenden Seite ein ebenes Kontaktblech zur weiteren Abschirmung des Wärme erzeugenden Elementes vorgesehen ist. Selbstverständlich ist es möglich, an gegenüberliegenden Seiten des Wärme erzeugenden Elementes jeweils Kontaktbleche mit einem den Positionsrahmen umgebenden Rand vorzusehen und zwar so, dass die jeweiligen Randstücke der Kontaktbleche komplementär zueinander sind mit dem Ziel, dass der Positionsrahmen durch die Blechabdeckungen nicht nur ober- bzw. unterseitig vollständig abgeteilt ist, sondern auch an seinem Außenrand im Wesentlichen vollumfänglich von der durch die Blechabdeckungen definierten Abschirmung umgeben ist.

Im Hinblick auf eine möglichst einfache Herstellung des Wärme erzeugenden Elementes ist es indes zu bevorzugen, lediglich eine Blechabdeckung mit einem den Positionsrahmen im Wesentlichen umfänglich umgebenden Rand auszuformen. Dieser Rand ist vorzugsweise mit dem Positionsrahmen verclipst, so dass bei der Montage des Wärme erzeugenden Elementes zunächst einseitig die Blechabdeckung gegebenenfalls unter vorherigem Einbringen der Isolierlage und des Kontaktbleches an den Positionsrahmen angeclipst werden kann. Danach kann der Positionsrahmen mit seiner noch offenen Seite nach oben angeordnet und in die Aufnahme(n) das bzw. die PTC-Elemente eingelegt werden. Die mit dem Positionsrahmen verclipste Blechabdeckung bildet dementsprechend einen fest mit dem Positionsrahmen verbundenen Boden, der das Auflegen der jeweiligen Schichten in dem Wärme erzeugenden Element vereinfacht. Als Schichten sind dabei insbesondere das bzw. die PTC-Elemente sowie das auf der der Blechabdeckung gegenüberliegenden Seite vorgesehene Kontaktblech, gegebenenfalls eine diesem zugeordnete äußere Isolierlage zu verstehen.

Gemäß einem nebengeordneten Aspekt der vorliegenden Erfindung schlägt diese eine elektrische Heizvorrichtung mit den Merkmalen von Anspruch 3 vor, welche weniger anfällig für EMV-Probleme ist. Bei dieser elektrischen Heizvorrichtung ist beidseitig des Wärme erzeugenden Elementes jeweils eine Blechabdeckung vorgesehen. Die Blechabdeckung befindet sich zwischen den Wellrippenelementen und dem Kontaktblech. Regelmäßig ist zwischen der Blechabdeckung und dem zugeordneten Kontaktblech jeweils eine Isolierlage vorgesehen. Eine gattungsgemäße elektrische Heizvorrichtung ist aus EP 2 190 256 A1 bekannt.

Mit Blick auf eine einfache und wirtschaftliche Montage bei einem kompakten Aufbau der elektrischen Heizvorrichtung wird gemäß einer bevorzugten Weiterbildung der vorliegenden Erfindung vorgeschlagen, dass die auf der einen Seite angeordnete Blechabdeckung dem Wärme erzeugenden Element zugeordnet ist und die auf der gegenüberliegenden, d.h. anderen Seite angeordnete Blechabdeckung dem Wellrippenelement. Die dem Wärme erzeugenden Element zugeordnete Blechabdeckung ist üblicherweise mit dem Positionsrahmen fest oder lösbar verbunden, vorzugsweise mit diesem über einen den Positionsrahmen umgebenden Rand verclipst. Die dem Wellrippenelement zugeordnete Blechabdeckung kann mit den Wellrippen des Wellrippenelementes verlötet oder auf andere Weise verbunden sein, beispielsweise durch Umbördeln mit dem Wellrippenelement verbunden sein. Ein solches Umbörderln mag zu einer Clipsverbindung zwischen dem Wellrippenelement und der zugeordneten Blechabdeckung führen. Jedenfalls ist bei der diskutierten Weiterbildung eine Blechabdeckung üblicherweise fest dem Positionsrahmen und die andere Blechabdeckung fest dem Wellrippenelement zugeordnet, so dass bei einer Montage des Schichtaufbaus innerhalb des Rahmens lediglich eine reduzierte Anzahl von Teilen gehandhabt werden muss, um eine gegenüber EMV-Problemen verbessert geschützte elektrische Heizvorrichtung herzustellen.

Mit Blick auf eine verbesserte Erwärmung der Luft wird gemäß einer bevorzugten Weiterbildung der vorliegenden Erfindung vorgeschlagen, dass der Heizblock mehrere in Durchströmungsrichtung des zu erwärmenden Mediums hintereinander vorgesehene Wellrippenelemente umfasst. Diese Wellrippenelemente liegen jeweils in identischen Ebenen hintereinander angeordnet. Sie sind üblicherweise versetzt zueinander vorgesehen, so dass die Wellrippen des zuerst angeströmten Wellrippenelementes die Wellrippen des nachfolgenden Wellrippenelementes nicht vollständig abdecken bzw. abschirmen. Vielmehr liegen die Wellrippen des in Strömungsrichtung zweiten Wellrippenelementes bei einer Projektion auf die hintereinander angeordneten Wellrippenelemente in Strömungsrichtung des zu erwärmenden Mediums frei. Bei dieser bevorzugten Weiterbildung umfasst die auf der anderen Seite vorgesehene Blechabdeckung mehrere Abdeckelemente. Jedes der Abdeckelemente ist einem einzigen Wellrippenelement zugeordnet. Die in Strömungsrichtung des zu erwärmenden Mediums hintereinander angeordneten Abdeckelemente bilden dementsprechend die Blechabdeckung auf der Wellrippenseite aus. Üblicherweise stoßen die Abdeckelemente bei der beschriebenen Anordnung der Wellrippenelemente in Strömungsrichtung hintereinander unmittelbar aneinander an, so dass sich zwischen den einzelnen Wellrippenelementen keine Störung der Abschirmung auf der Wellrippenseite ergibt.

Gemäß der vorliegenden Erfindung hat die elektrische Heizvorrichtung ein Anschlussgehäuse, welches an einem stirnseitigen Ende des Schichtaufbaus vorgesehen ist. Ein solches Anschlussgehäuse nimmt üblicherweise die elektrischen Anschlusselemente zu ausgewählten, üblicherweise sämtlichen Kontaktblechen in sich auf, so dass die einzelnen Wärme erzeugenden Elemente in dem Anschlussgehäuse elektrisch angeschlossen sind. Das Anschlussgehäuse kann auch eine Steuervorrichtung zur Ansteuerung und Regelung der einzelnen Wärme erzeugenden Elemente haben. Diese können zu unterschiedlichen Heizstufen gruppiert und zusammengefasst sein. Das Anschlussgehäuse hat gemäß einer bevorzugten Weiterbildung der vorliegenden Erfindung ein Abschirmgehäuseelement. Dieses Abschirmgehäuseelement kann ein das Gehäuse ganz oder teilweise ausbildendes Element sein, welches aus einem metallischen Werkstoff hergestellt ist. Alternativ kann das Abschirmgehäuseelement auch lediglich als Metall- bzw. Blechschale ausgeformt sein, welches die das Gehäuse bildenden und die Abdichtung der in dem Anschlussgehäuse vorgesehenen Komponenten, insbesondere der Steuerkomponenten bewirkenden Gehäuseschalenelemente abschirmend umgibt. Das Abschirmgehäuseelement ist gemäß der bevorzugten Weiterbildung elektrisch leitend mit den Blechabdeckungen verbunden. Dadurch ergibt sich eine einheitliche Abschirmung, die sowohl die Wärme erzeugenden Elemente des Schichtaufbaus wie auch das Anschlussgehäuse umgibt und dementsprechend auch EMV-Störungen, die von dem Anschlussgehäuse ausgehen können, abschirmt. Des Weiteren bietet die Weiterbildung die Möglichkeit, die Abschirmung über das Anschlussgehäuse zu erden.

Das Abschirmgehäuseelement ist vorzugsweise leitend mit den Blechabdeckungen verclipst. Dementsprechend sind Clipsstege vorgesehen, welche das Abschirmgehäuseelement elektrisch leitend mit den Blechabdeckungen verbindet. Dabei muss die elektrisch leitende Verbindung nicht unmittelbar zwischen dem Abschirmgehäuseelement und der Blechabdeckung erfolgen. Vielmehr kann - da die Wellrippenelemente üblicherweise unmittelbar, d.h. elektrisch leitend mit den zugeordneten Blechabdeckungen verbunden sind - die elektrische Kontaktierung zwischen dem Abschirmgehäuseelement und der Blechabdeckung auch über das Wellrippenelement erfolgen.

Das Abschirmgehäuseelement kann als gegossenes metallisches Gehäuse ausgeformt sein. Alternativ kann das Abschirmgehäuseelement auch als Kunststoffgehäuseelement ausgebildet sein, welches zur Abschirmung innerhalb einer Blechschale aufgenommen ist.

Gemäß einer bevorzugten Weiterbildung der vorliegenden Erfindung bildet das Abschirmgehäuseelement Ein- und Austrittsöffnungen für einen gegenüber dem Inneren des Anschlussgehäuses abgedichteten Kühlkanal aus. In diesem Kühlkanal befindet sich üblicherweise zumindest ein Kühlkörper, der zur Kühlung eines in dem Anschlussgehäuse aufgenommenen Leistungsschalters vorgesehen ist und dessen Verlustleistung an das zu erwärmende Medium in Form von Wärme abgibt.

Mit ihrem weiteren, nebengeordneten Aspekt gibt die vorliegende Erfindung eine elektrische Heizvorrichtung der oben genannten Art an, die ein elektrische Kontaktelemente von mehreren Wärme erzeugenden Elementen aufnehmendes Anschlussgehäuse hat. Das Anschlussgehäuse dient dabei regelmäßig dem Anschluss von ausgewählten, mitunter sämtlichen Kontaktblechen an eine Steuereinrichtung, die in dem Anschlussgehäuse aufgenommen sein kann. Diese Steuereinrichtung umfasst üblicherweise eine bestückte Leiterplatte bzw. Platine. Häufig ist diese heutzutage mit zumindest einem Halbleiter-Leistungsschalter bestückt, der die Wärme erzeugenden Elemente ansteuert und dabei Verlustleistung erzeugt, die regelmäßig durch Kühlung des Leistungsschalters abgeführt werden muss. Ein Anschlussgehäuse kann aber auch alternativ oder zusätzlich Leiterplatten oder Leiterelemente umfassen, durch welche die angeschlossenen Wärme erzeugenden Elemente kontaktiert bzw. gruppiert werden.

Mit Blick auf die gegebene EMV-Problematik wird mit der vorliegenden Erfindung vorgeschlagen, das Anschlussgehäuse mit einem Abschirmgehäuseelement, einem in dem Abschirmgehäuseelement aufgenommenen Kunststoffgehäuseelement und einem an das Abschirmgehäuseelement und/oder das Kunststoffgehäuseelement dichtend anlegbarem Gehäusedeckelelement auszubilden. Das Abschirmgehäuseelement ist dabei üblicherweise wie auch das Gehäusedeckelelement als Abschirmung ausgebildet, d.h. aus Metall bzw. mit einer Metalleinlage ausgeformt. Dementsprechend schirmen Abschirmgehäuseelement und Gehäusedeckelelement das Innere des Anschlussgehäuses ab. Das Abschirmgehäuseelement und/oder das Gehäusedeckelelement sind dabei üblicherweise mit der Abschirmung des Schichtaufbaus, beispielsweise einer Blechabdeckung des Wärme erzeugenden Elementes und/oder den Wellrippenelementen des Schichtaufbaus elektrisch verbunden, so dass die elektrische Heizvorrichtung eine einheitliche Abschirmung aufweist.

Das Kunststoffgehäuseelement ist entsprechend angepasst und ausgebildet zur Aufnahme bzw. Halterung der Steuereinrichtung und/oder zur Halterung von den Anschluss der elektrischen Heizvorrichtung bewirkenden Anschlusselementen. Über diese elektrischen Anschlusselemente kann die elektrische Heizvorrichtung direkt an eine Leistungsversorgung angeschlossen sein. Alternativ können entsprechende Anschlusselemente in dem Kunststoffgehäuseelement lediglich gehalten und über das Gehäusedeckelelement an der Außenseite des Anschlussgehäuses zugänglich gemacht werden. Das Kunststoffgehäuseelement dient dabei der isolierenden Aufnahme der den Leistungsstrom leitenden und/oder schaltenden Elemente der Steuereinrichtung bzw. von Kontaktflächenelementen, welche üblicherweise die Anschlusselemente zu einigen oder allen Wärme erzeugenden Elementen kontaktieren bzw. gruppieren.

Durch diese Weiterbildung kann dementsprechend zum einen eine einfache Abschirmung des Anschlussgehäuses gegebenenfalls unter Einbeziehung des Schichtaufbaus bewirkt werden. Durch das Kunststoffgehäuseelement wird andererseits eine differenzierte Ausgestaltung zur Aufnahme und Halterung von elektrisch leitenden Komponenten geschaffen. Da das Kunststoffgehäuseelement in das Abschirmgehäuseelement eingesetzt ist, sind auch die in dem Kunststoffgehäuseelement aufgenommenen elektrischen oder elektronischen Komponenten abgeschirmt.

Gemäß einer bevorzugten Weiterbildung der vorliegenden Erfindung hat die Steuereinrichtung zumindest einen Leistungsschalter. Hierbei handelt es sich um einen Halbleiter-Leistungsschalter, der zur Steuerung der Wärmeleistung des oder der Wärme erzeugenden Elemente vorgesehen ist und hierbei Verlustleistung abgibt. Dementsprechend ist dem Leistungsschalter zumindest ein Kühlkörper zugeordnet. Dieser Kühlkörper ist nach der bevorzugten Weiterbildung in dem Kunststoffgehäuseelement aufgenommen. So lassen sich durch das Kunststoffgehäuseelement auf einfache Weise Aufnahme- bzw. Sicherungsflächen zur Halterung des Kühlkörpers ausbilden. Der Kühlkörper ist aber weiterhin elektrisch leitend mit dem Abschirmgehäuseelement verbunden und dementsprechend in die Abschirmung eingebunden. So kann durch Überprüfen der Polarität des Abschirmgehäuses festgestellt werden, ob die gewünschte Isolation der auf Masse liegenden Teile weiterhin wirksam ist, wie dies die EP 2 299 200 lehrt. Dabei ist zu bemerken, dass der Kühlkörper üblicherweise gegenüber dem Leistungsschalter elektrisch isoliert vorgesehen ist, wenngleich beide Bauteile gut wärmeleitend an einander anliegen. Dementsprechend befindet sich zwischen dem Leistungsschalter und dem Kühlkörper üblicherweise eine elektrische Isolierung, die den Wärmedurchtritt von dem Leistungsschalter auf den Kühlkörper nur geringfügig behindert.

Gemäß einer bevorzugten Weiterbildung der vorliegenden Erfindung ist der Kühlkörper dichtend in das Gehäuse eingesetzt. Danach wird die durch das Zusammenwirken von Gehäusedeckelelement und Abschirmgehäuseelement bewirkte Abdichtung des Aufnahmeraumes des Anschlussgehäuses auch durch den außen an dem Anschlussgehäuseelement freiliegenden Kühlkörper nicht beeinträchtigt. Dieser Kühlkörper liegt üblicherweise in dem Strom des zu erwärmenden Mediums frei und wird von diesem Strom gekühlt. Der Kühlkörper ist vorzugsweise aber in Grenzen beweglich in dem Kunststoffgehäuseelement gehalten. Die Bewegung des Kühlkörpers erfolgt üblicherweise gegen eine Vorspannung, die üblicherweise durch die für den Kühlkörper vorgesehene Abdichtung bewirkt wird. Durch die Vorspannung wird dem Kühlkörper eine Gegenbewegung aufgeprägt, so dass dieser konstant unter Vorspannung an dem Leistungsschalter anliegt und dessen Verlustleistung wärmeleitend abführen kann. Die Beweglichkeit des Kühlkörpers innerhalb des Anschlussgehäuses ist dabei üblicherweise so gewählt, dass der Kühlkörper 5/10, vorzugsweise 7/10 in Einbringbewegung wandern und damit Dickentoleranzen des Leistungsschalters ausgleichen kann, ohne dass die Abdichtung verlorengeht. Als Dichtelement hierfür wird üblicherweise ein ring- oder zylinderförmiger Dichtkörper aus einem Elastomer zum Einsatz kommen. Diese Werkstoffe haben sich besonders geeignet zur Aufrechterhaltung einer Vorspannung und Dichtigkeit auch bei relativ hohen Temperaturen und über einen langen Zeitraum erwiesen. Dem Anschlussgehäuse ist üblicherweise ein Dichtelement zugeordnet, durch dessen Kompression der Leistungsschalter unter Vorspannung an dem Kühlkörper anliegt. Mit Blick auf die gewünschte Beweglichkeit des Kühlkörpers hat das Anschlussgehäuse üblicherweise auf dem Umfang einer Kühlkörpereinbringöffnung verteilt angeordnete Stützstellen, auf denen sich das Dichtelement abstützt. Seitlich neben diesen Stützstellen kann das Dichtelement bei Kompression in Richtung auf den Schichtaufbau wandern und damit der Bewegung des Kühlkörpers in Grenzen ausweichen. Mit anderen Worten ist das Dichtelement nicht vollumfänglich in der Einbringöffnung abgestützt, sondern lediglich an den Stützstellen, die in Umfangsrichtung verteilt in der Einbringöffnung angeordnet sind.

Gemäß einer bevorzugten Weiterbildung der vorliegenden Erfindung ist an dem Kunststoffgehäuseelement ein Anschlussbolzen gehalten, der elektrisch leitend mit dem Abschirmgehäuseelement verbunden ist und dementsprechend der Masseanbindung der elektrischen Heizvorrichtung dient.

Schließlich wird gemäß einer weiteren bevorzugten Ausgestaltung der vorliegenden Erfindung vorgeschlagen, an dem Anschlussgehäuse eine zur dichtenden Aufnahme eines von dem Wärme erzeugenden Element abragenden Anschlussstutzens ausgebildete Stutzenaufnahme auszubilden. Dementsprechend erlaubt das so weitergebildete Anschlussgehäuse im Zusammenwirken mit dem Anschlussstutzen des Wärme erzeugenden Elementes eine abgedichtete Montage des Wärme erzeugenden Elementes in dem Anschlussgehäuse. Die durch das Wärme erzeugende Elemente ausgeformte Aufnahme ist dementsprechend über das Anschlussgehäuse abgedichtet. Die Aufnahme ist indes auch über das Anschlussgehäuse zugänglich, um beispielsweise Kontaktelemente in das Wärme erzeugende Element einzubringen. Es ist aber auch möglich, nach vollständiger Montage sämtlicher Wärme erzeugender Elemente an dem Anschlussgehäuse über dieses eine Dichtigkeitsprüfung durchzuführen, so dass im Wesentlichen die fertig montierte elektrische Heizvorrichtung insgesamt auf Dichtigkeit überprüft wird. Dabei wird die Stutzenaufnahme üblicherweise durch eine Gehäusebasis ausgebildet, so dass nach der Dichtigkeitsüberprüfung lediglich der Gehäusedeckel, gegebenenfalls zuvor noch elektronische Bauteil eingesetzt werden müssen, um die elektrische Heizvorrichtung mit in baulicher Einheit daran vorgesehener Steuervorrichtung zu vervollständigen.

Regelmäßig ist zu jedem Kontaktelement des Wärme erzeugenden Elementes jeweils ein separater und für sich abgedichtet in einer Stutzenaufnahme aufgenommener Anschlussstutzen ausgebildet. Es ist aber ebenso möglich, einen Anschlussstutzen vorzusehen, der sämtliche elektrische Leiterbahnen zum Innern des Wärme erzeugenden Elementes in sich aufnimmt und dichtend in der Stutzenaufnahme des Anschlussgehäuses aufgenommen ist.

Gemäß einer bevorzugten Weiterbildung der vorliegenden Erfindung befindet sich zwischen dem Stutzen und der Stutzenaufnahme ein Dichtelement aus einem elastomeren Material. Dieses Dichtelement ist praktischer Weise vor der Montage auf den Stutzen aufgebracht und kann durch Überspritzen verbunden sein. Durch diese stoffschlüssige Verbindung erfolgt zumindest einseitig eine in jedem Fall dichte Verbindung zwischen dem Dichtelement und der zugeordneten Anlagefläche, die eine Fläche des Wärme erzeugenden Elementes und eine Fläche des Anschlussgehäuses sein kann.

Weitere Einzelheiten und Vorteile der vorliegenden Erfindung ergeben sich aus der nachfolgenden Beschreibung von Ausführungsbeispielen in Verbindung mit der Zeichnung. Dabei zeigt die Zeichnung sowohl den grundsätzlichen Aufbau einer elektrischen Heizvorrichtung, in welche ein Wärme abgebendes Element, das für sich allein erfindungswesentlich sein kann, eingebaut ist. In der Zeichnung zeigen:
- Figur 1: eine perspektivische Seitenansicht eines Ausführungsbeispiels einer elektrischen Heizvorrichtung für ein Kraftfahrzeug;
- Figur 2: eine perspektivische Seitenansicht in Explosionsdarstellung eines Wärme erzeugenden Elementes der in Figur 1 gezeigten elektrischen Heizvorrichtung;
- Figur 3: eine perspektivische Stirnseitenansicht des in Figur 2 gezeigten Ausführungsbeispiels;
- Figur 4: eine perspektivische Seitenansicht des in Figur 1 gezeigten Ausführungsbeispiels in einer Explosionsdarstellung der wesentlichen Bestandteile des Ausführungsbeispiels;
- Figur 5: einen Fügebereich zwischen einem Anschlussgehäuse und einem Schichtaufbau des in den Figuren 1 und 4 gezeigten Ausführungsbeispiels einer elektrischen Heizvorrichtung unter Weglassung verschiedener Elemente;
- Figur 6: eine Querschnittsdarstellung entlang der Linie VI-VI gemäß Figur 7, d.h. eine Schnittansicht durch ein Wärme erzeugendes Element nach Figur 2 auf mittlerer Höhe desselben unter Weglassung des Abschirmgehäuses;
- Figur 7: eine perspektivische Stirnseitenansicht des in Figur 1 gezeigten Ausführungsbeispiels einer elektrischen Heizvorrichtung, welche Einblick in das Anschlussgehäuse gibt und bei dem die Leiterplatte sowie der Gehäusedeckel fehlen;
- Figur 8: das in Figur 7 gezeichnete Detail VIII in vergrößerter Darstellung;
- Figur 9: eine Querschnittansicht des Anschlussgehäuses der elektrischen Heizvorrichtung nach Figur 1 auf Höhe eine Kühlkörpers;
- Figur 10: eine perspektivische Seitenansicht auf ein erstes Ausführungsbeispiel eines Heizstabes, welcher in der elektrischen Heizvorrichtung nach Figur 1 eingebaut sein kann;
- Figur 11: eine Querschnittsansicht entlang der Linie XI-XI gemäß der Darstellung in Figur 10;
- Figur 12: eine Seitenansicht des in Figur 10 gezeigten Ausführungsbeispiel eines Heizstabes;
- Figur 13: eine perspektivische Seitenansicht gemäß Figur 13 auf ein alternatives Ausführungsbeispiel eines Heizstabes;
- Figur 14: eine Querschnittsansicht entlang der Linie XIV-XIV gemäß der Darstellung in Figur 13;
- Figur 15: eine Seitenansicht des in Figur 13 gezeigten weiteren Ausführungsbeispiels eines Heizstabes;
- Figur 16: eine perspektivische Explosionsdarstellung eines zur Aufnahme von Heizstäben nach den Figuren 13 bis 15 geeigneten Rahmens;
- Figur 17: eine Schichten des geschichteten Aufbaus teilweise weglassende perspektivische Draufsicht auf den randseitigen Bereich eines weiteren Ausführungsbeispiels einer erfindungsgemäßen Heizvorrichtung und
- Figur 18: eine teilweise weggeschnittene perspektivische Seitenansicht des in Figur 17 gezeigten Ausführungsbeispiels.

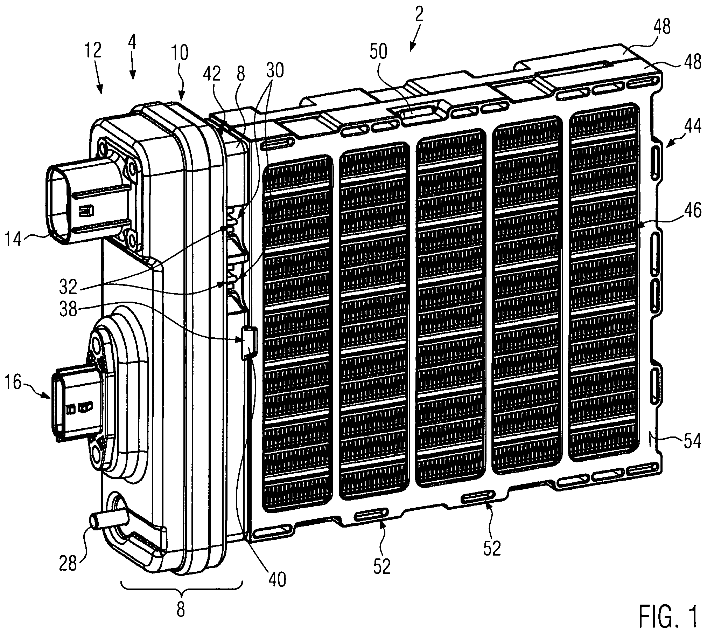

Die Figur 1 zeigt ein Ausführungsbeispiel einer elektrischen Heizvorrichtung mit einem mit Bezugszeichen 2 gekennzeichneten Leistungsteil und einem mit Bezugszeichen 4 gekennzeichneten Steuerteil. Der Leistungsteil 2 und der Steuerteil 4 bilden eine bauliche Einheit der elektrischen Heizvorrichtung.

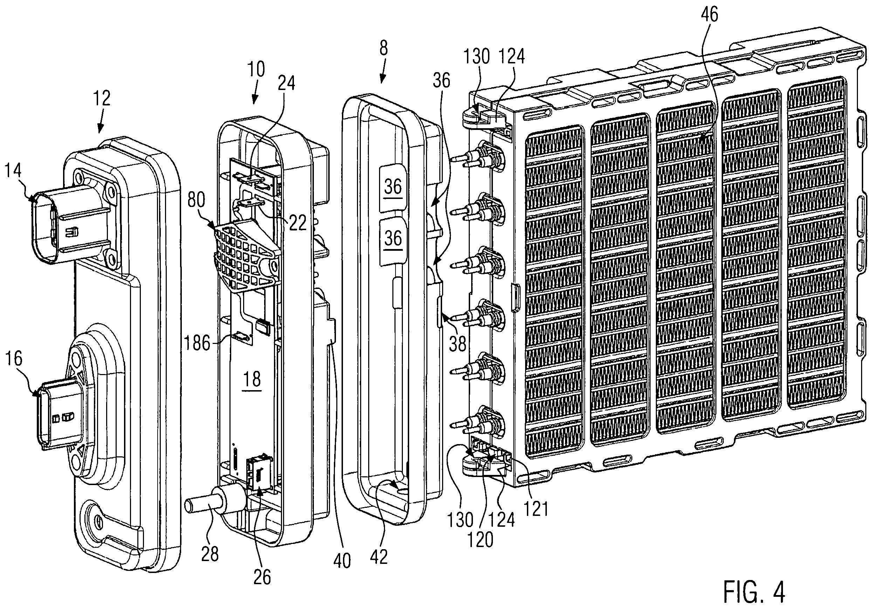

Der Steuerteil 4 wird außenseitig von einem Anschlussgehäuse 6 gebildet, welches - wie insbesondere die Darstellung gemäß Figur 4 verdeutlicht - aus einem Abschirmgehäuse 8, welches als beispielsweise tiefgezogene oder gegossene bzw. tiefgezogene Metallschale ausgeformt ist, ein Kunststoffgehäuseelement 10, welches in die Metallschale 8 eingesetzt ist, und einem Gehäusedeckel 12 besteht. Der Gehäusedeckel 12 kann im gefügten Zustand einen freien Flansch der Blechwanne 8 übergreifen und aus Metall gebildet sein, so dass das Innere des Steuerteils 4 vollständig durch ein metallisches Anschlussgehäuse 6 abgeschirmt ist. Der Gehäusedeckel 12 kann aber auch aus Kunststoff ausgebildet sein.

Der Gehäusedeckel 12 trägt ein weibliches Steckergehäuse 14 für den Leistungsstrom und ein weiteres weibliches und als Steuersteckergehäuse 16 ausgeformtes Gehäuseelement. Beide Steckergehäuse 14, 16 sind als Kunststoffelemente mit dem metallischen Gehäusedeckel 12 verbunden und bilden Führungs- und Gleitflächen für jeweils ein nicht dargestelltes männliches Steckerelement aus.

Das Kunststoffgehäuseelement 10 nimmt eine Leiterplatte 18 in sich auf, die teilweise von einem Druckelement 20 überdeckt ist, welches nachfolgend noch näher erläutert wird. Die Leiterplatte 18 wird überragt von einem Plusanschlusssteckkontakt 22 und einem Minusanschlusssteckkontakt, die in dem Leistungssteckergehäuse freiliegen und mit der Leiterbahn elektrisch verbunden sind. Die Leiterplatte 18 trägt des Weiteren ein Steuerelementkontakte enthaltendes Steuerkontaktelement 26, welches über das Steuersteckergehäuse 16 mittels Leitungen erreichbar ist. Wie aus Figur 4 ersichtlich, ist das Steuersteckergehäuse 16 versetzt zu dem Steuerkontaktelement 26 angeordnet. Dieser Abstand ist begründet durch die Einbausituation der elektrischen Heizvorrichtung in dem Kraftfahrzeug. Die elektrische Kontaktierung zwischen dem Steuerkontaktelement 26 und dem Steuersteckergehäuse 16, bzw. den dort vorgesehenen Kontaktelementen erfolgt über elektrische Leitungen, die innenseitig in dem Gehäusedeckel 12 verlegt sind. Der Gehäusedeckel wird des Weiteren im montierten Zustand überragt von einem Anschlussbolzen 28 für den Masseanschluss, der elektrisch mit dem Abschirmgehäuse 8 verbunden ist.

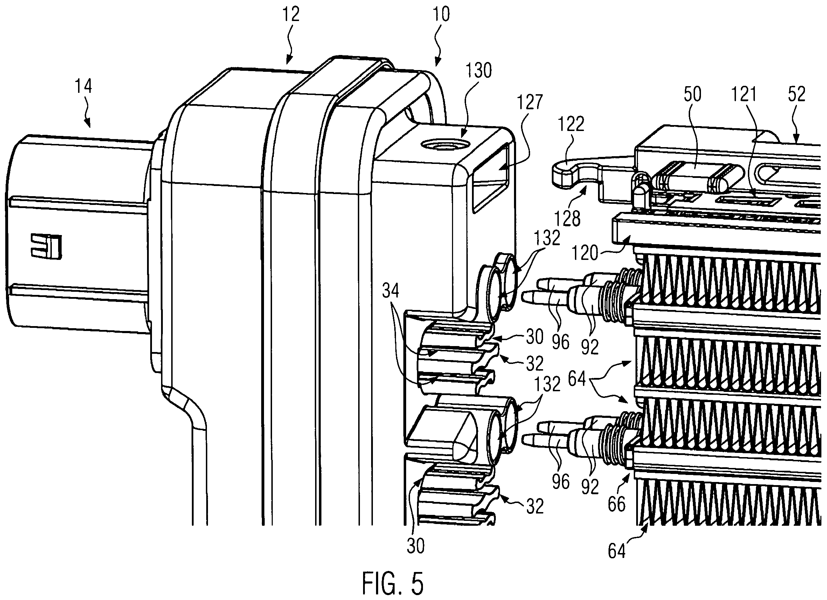

Auf der der Leiterplatte 18 gegenüberliegenden Endseite bildet das Kunststoffgehäuseelement 10 zwei Kühlkanäle 30 für Kühlkörper 32 aus, die in Figur 4 gerade noch angedeutet, indes in den Figuren 1 und 5 deutlicher zu erkennen sind. Das freie Ende der Kühlkörper 32 umfasst mehrere, sich im Wesentlichen parallel zueinander erstreckende Kühlstege, die jeweils Luftdurchtrittskanäle 34 definieren. Die Kühlkörper 32 sind aus einem gut wärmeleitfähigen Material, beispielsweise Aluminium oder Kupfer.

Die in Figur 5 nicht dargestellte, weggelassene Blechwanne hat - wie insbesondere die Figuren 1 und 4 verdeutlichen, korrespondierend zu den Kühlkanälen 30 einander gegenüberliegende Durchtrittsöffnungen 36 für Luft, die als Eintritts- und Austrittsöffnungen zu den Kühlkanälen 30 vorgesehen sind. Diese Durchtrittsöffnungen 36 sind in der Metallschale 8 herausgebildet. In etwa auf mittiger Höhe in Längsrichtung hat die Metallschale 8 Verriegelungsöffnungen 38, die nach der Endmontage des Steuerteils 4 an dem Leistungsteil 2 von Rastnasen 40 durchragt sind, welche mit dem Leistungsteil 2 formschlüssig im Eingriff und an dem äußeren Rand des Kunststoffgehäuseelementes 10 angeformt sind. Die Metallschale 8 weist ferner an gegenüberliegenden Stirnseiten jeweils Befestigungsbohrungen 42 auf, auf die nachfolgend noch näher eingegangen werden wird.

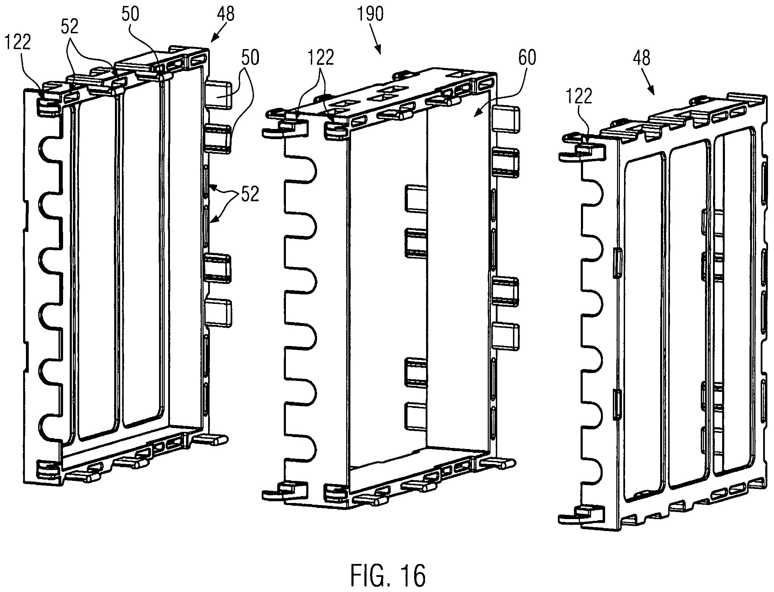

Der Leistungsteil 2 hat einen Rahmen 44, der bei dem Ausführungsbeispiel gemäß Figur 1 umfänglich geschlossen ist und einen mit Bezugszeichen 46 gekennzeichneten Schichtaufbau, der auch als Heizblock bezeichnet wird, umfänglich umgibt. Der Rahmen 44 ist gebildet aus zwei Rahmenelementen 48, die miteinander über Rastverbindungen verrastet sind, die mit Bezugszeichen 50 (männliches Rastelement) und Bezugszeichen 52 (weibliches Rastelement), insbesondere in Figur 16 gekennzeichnet sind.

Der Rahmen 44 bildet an gegenüberliegenden Außenseiten 54 jeweils Öffnungen 56 für den Durchtritt von zu erwärmender Luft des in dem Ausführungsbeispiel gezeigten Luftheizers aus. Diese Öffnungen 56 sind bei dem gezeigten Ausführungsbeispiel durch Querstreben 58 versteift, die gegenüberliegende Seitenränder des Rahmens 44 miteinander verbinden.

Der Rahmen 44 definiert in seinem Inneren einen Aufnahmeraum 60, der derart angepasst ist, dass der Schichtaufbau 46 in dem Rahmen 44 eng eingepasst aufgenommen werden kann.

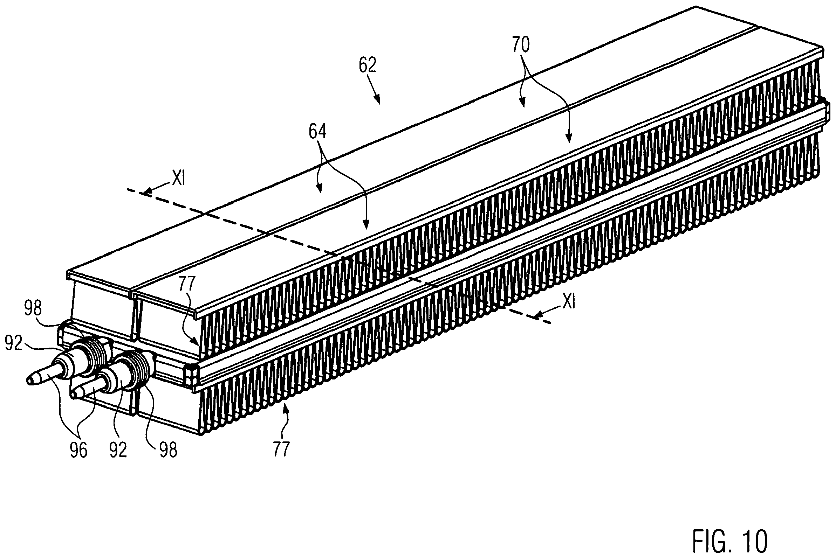

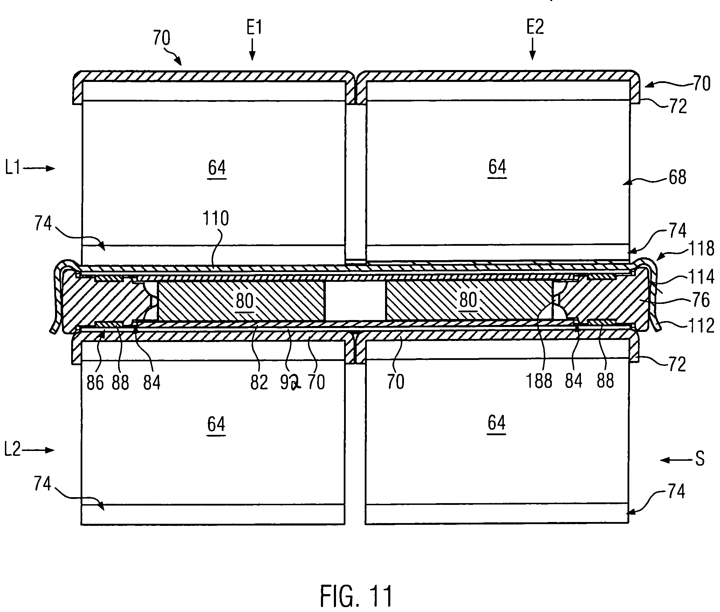

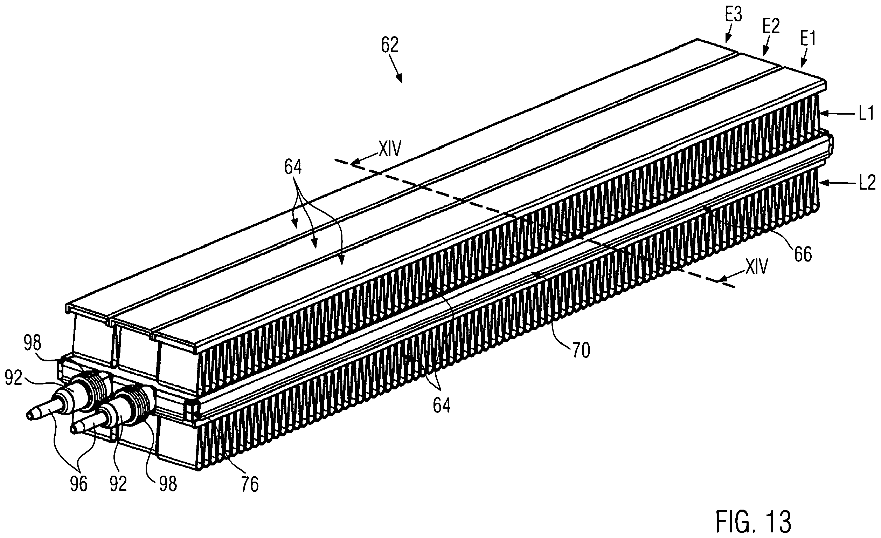

Der Heizblock bzw. Schichtaufbau 46 ist im Wesentlichen aus den in den Figuren 10 und 13 gezeigten Heizstäben 62 gebildet, die übereinander geschichtet in der Aufnahme 60 angeordnet sind. Die Heizstäbe 62 bestehen aus zumindest zwei Wellrippenelementen 64, die zwischen sich ein Wärme erzeugendes Element 66 in sich aufnehmen. Wie die Figuren 10 und 11 verdeutlichen, bestehen die Wellrippenelemente aus mäandrierend gebogenen Blechstreifen 68, die einseitig von einer Blechabdeckung 70 abgedeckt und auch randseitig über einen umbogenen Rand 72 der Blechabdeckung 70 gefasst sind. Die jeweils andere Oberseite der mäandrierend gebogenen Blechstreifen 68 ist frei und wird von umbogenen freien Enden 74 des Blechsteifens 68 direkt ausgeformt. Bei dem in den Figuren 10 und 11 gezeigten Heizstab 62 sind in Durchtrittrichtung der zu erwärmenden Luft, d. h. rechtwinklig zu der von den Außenseiten 54 aufgespannten Fläche des Rahmens 44 zwei Wellrippenelemente 64 jeweils nebeneinander vorgesehen. Diese Anordnung von in Durchströmungsrichtung hintereinander vorgesehenen Wellrippenelementen 64 bildet eine Lage aus. Dabei ist in jeder mit Bezugszeichen L gekennzeichneten Lage jeweils ein Wellrippenelement 64 pro Ebene E vorgesehen. Mit S ist die Strömungsrichtung des zu erwärmenden Luftstroms in Figur 11 eingezeichnet. Dieser trifft danach zunächst auf die erste Ebene E1, d. h. die in der ersten Ebene vorgesehenen Wellrippenelemente 64 der ersten Lage L1 und der zweiten Lage L2 und erst danach auf die in der zweiten Ebene E2 vorgesehenen Wellrippenelemente 64. Die Wellrippenelemente 64 sind dabei in Strömungsrichtung S, d.h. rechtwinklig zu der die Öffnung 56 definierenden Au-ßenseite 54 streng hintereinander angeordnet. Dabei bildet das Wärme erzeugende Element 66 eine ebene Anlagefläche für die Wellrippenelemente 64.

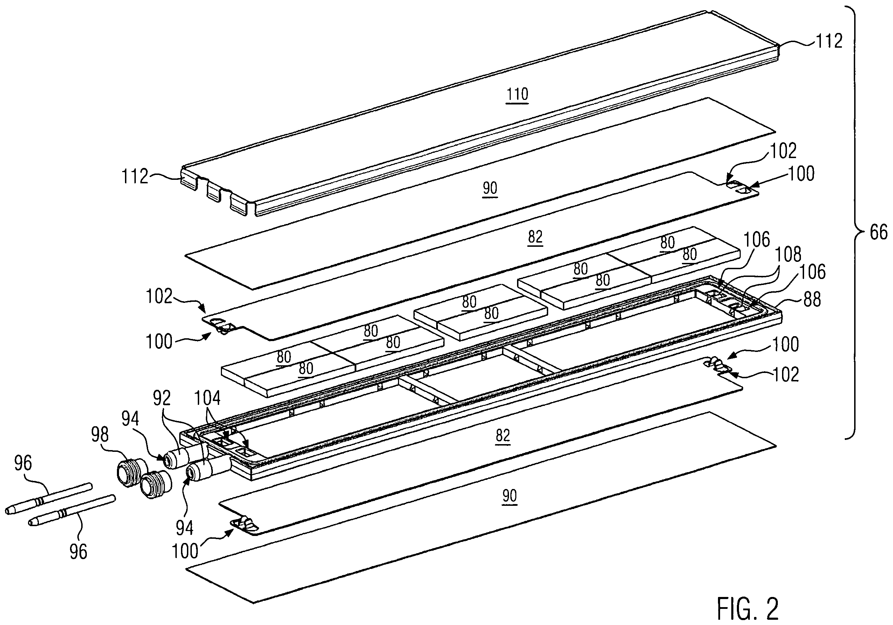

Wie insbesondere Figur 2 verdeutlicht, besteht das Wärme erzeugende Element 66 aus mehreren übereinanderliegenden Schichten. Das Wärme erzeugende Element 66 ist im Wesentlichen symmetrisch aufgebaut, wobei in der Mitte ein mit Bezugszeichen 76 gekennzeichneter Positionsrahmen aus einem elektrisch isolierenden Material, insbesondere Kunststoff vorgesehen ist. Der Positionsrahmen 76 bildet vorliegend drei Aufnahmen 78 für PTC-Elemente 80 aus. In einer Aufnahme 78 sind mehrere, zumindest zwei PTC-Elemente 80 aufgenommen. Die beiden äußeren Aufnahmen 78 nehmen jeweils vier PTC-Elemente 80 auf. An gegenüberliegenden Seiten der PTC-Elemente 80 liegen Kontaktbleche 82 an. Diese beiden Kontaktbleche 82 sind identisch ausgebildet und aus gestanztem elektrisch leitendem Blech ausgeformt. Die Kontaktbleche 82 sind als separate Elemente auf die PTC-Elemente 80 aufgelegt. Diese können zusätzlich mit einer aufgedampften Elektrodenschicht versehen sein, wie dies allgemein üblich ist. Die Elektrodenschicht ist indes nicht Kontaktblech 82 im Sinne der Erfindung.

Wie insbesondere Figur 11 verdeutlicht, liegt das einer Ebene E1 zugeordnete PTC-Element 80 innerhalb der Vorder- und Rückseiten der zugeordneten Wellrippenelemente 64. Mit anderen Worten befindet sich zwischen zwei in einer Lage L1 vorgesehenen Wellrippenelementen 64 kein PTC-Element 80. Dadurch wird eine thermische Wechselwirkung zwischen den PTC-Elementen unterschiedlicher Ebenen E1, E2 vermieden.

Die Kontaktbleche 82 sind so dimensioniert, dass diese zwar innerhalb des Positionsrahmens 76 aufgenommen, jedoch umfänglich mit Abstand zu dem Positionsrahmen 78 angeordnet sind. Der insofern gebildete Umfangsspalt ist in Figur 11 mit Bezugszeichen 84 gekennzeichnet. In etwa auf Höhe der Kontaktbleche 82 bildet der Positionsrahmen 76 eine umlaufende Dichtnut 86 aus, in welche ein elastomerer Kleberand 88 als Ringwulst eingefüllt ist. Dieser Kleberand 88 umgibt sämtliche Aufnahmen 78 voll umfänglich und dient der Verklebung einer mit Bezugszeichen 90 gekennzeichneten Isolierlage, die vorliegend aus einer isolierenden Kunststofffolie gebildet ist und welche bis zu einem Randbereich des Positionsrahmen 76 reicht, jedenfalls in Umfangsrichtung jeweils den Kleberand 88 mit Übermaß überragt. Durch die Verbindung der Isolierlage 90 mit dem Positionsrahmen 76 vermittelt durch den Kleberand 88 ist die Aufnahme 78 sowie die Kontaktbleche 82 hermetisch gegenüber dem Außenumfang versiegelt.

Zugang zu dem Inneren des Positionsrahmen 76 geben allein an einer Stirnseite des Positionsrahmens 76 und durch dessen Material einteilig daran ausgebildete Anschlussstutzen 92, die einen Kanal 94 zu Aufnahme von stiftförmigen Kontaktelementen 96 voll umfänglich umgeben. An ihrem freien Ende tragen die Anschlussstutzen 92 aus einem thermoplastischen Elastomer oder PTFE gebildete Dichtelemente 98 mit labyrinthartiger Dichtstruktur, die durch Umspritzen oder Aufstecken mit dem zugehörigen Anschlussstutzen 92 verbunden sein können. An der Stirnseite jedes Positionsrahmens 76 sind zwei Anschlussstutzen 92 mit identischer Ausgestaltung und Abdichtung vorgesehen zur Aufnahme von zwei Kontaktstiften 96 zur elektrischen Kontaktierung der Kontaktbleche 82.

Wie weiterhin Figur 2 zu entnehmen ist, haben die Kontaktbleche 82 dazu mittels Stanzen und Biegen hergestellte weibliche Clipselementaufnahmen 100, die an seitlich versetzten Vorsprüngen 102 des Kontaktblechs 82 ausgeformt sind, welche Vorsprünge 102 innerhalb der durch den Kleberand 88 gegebenen Umrandung enden und jeweils zugeordnete und durch den Positionsrahmen 76 ausgeformte Clipsöffnungen 104, 106 überdecken. In den den Anschlussstutzen 92 gegenüberliegend an dem Positionsrahmen 76 ausgeformten Clipsöffnungen 106 sind durch das Material des Positionsrahmens 76 einteilig daran ausgeformte Clipsstege 108 vorgesehen. Die Ausgestaltung und der Durchmesser dieser Clipsstege 108 entsprechen dem Durchmesser eines Kontaktstiftes 96. Die Kontaktstifte 96 liegen in den Clipsöffnungen 104 frei und sind mit den weiblichen Clipselementaufnahmen 100 der Kontaktbleche 82 verbunden, wohingegen an der gegenüberliegenden Seite die weiblichen Clipselementaufnahmen 100 in die Clipsöffnungen 106 hineinragen und mit den Clipsstegen 108 verrastet sind. An der die Anschlussstutzen 92 aufweisenden Anschlussseite des Wärme erzeugenden Elementes 66 können die beschriebenen Clipsverbindungen entweder durch Positionieren der Kontaktbleche 82 in ihrer Einbaulage und nachfolgendes Einschieben der Kontaktstifte 96 durch die Kanäle 94 oder durch Verrasten der weiblichen Clipselementaufnahmen 100 mit den bereits in Position befindlichen Kontaktstiften 96 verwirklicht werden.

Auf seiner in Figur 2 gezeigten Oberseite ist das Wärme erzeugende Element 66 mit einer Blechabdeckung 110 versehen. Diese Blechabdeckung 110 überdeckt die gesamte, der Blechabdeckung 110 zugeordnete Isolierlage 90 und hat einen umlaufenden Rand 112, der an einer umlaufenden Randfläche 114 des Positionsrahmens 76 kraftschlüssig anliegt und dementsprechend die Blechabdeckung 110 durch Vorspannkraft an dem Positionsrahmen 76 sichert (vgl. auch Fig. 11). Des Weiteren ist durch den Rand 112 eine genaue Positionierung der Blechabdeckung 110 relativ zu dem Außenumfang des Positionsrahmens gewährleistet. Die Blechabdeckung 110 hat an dem freien Ende des Randes 112 eine leichte konische Verbreiterung, die als trichterförmige Einbringöffnung für den Positionsrahmen wirkt. Der umlaufende Rand 112 ist lediglich in den Eckbereichen und auf Höhe der Anschlussstutzen 92 durchbrochen und bildet eine einseitige Abschirmung für das Wärme erzeugende Element 66.

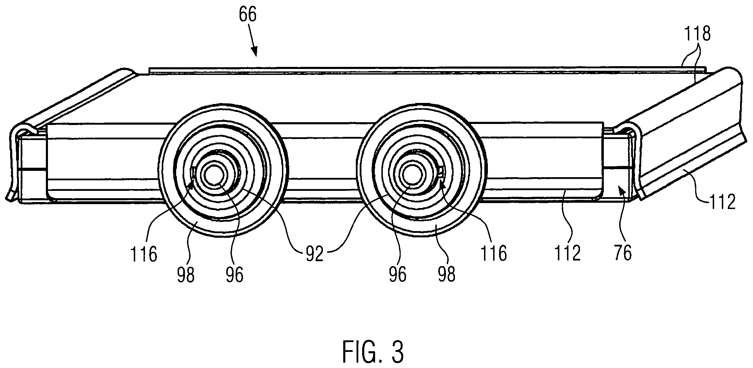

Wie Figur 3 verdeutlicht, sind die passend zu den Kontaktstiften 96 ausgebildeten Kanäle 94 radial zur Ausbildung eines nutförmigen Prüfkanals 116 verbreitert. Dieser Prüfkanal 116 erstreckt sich von der vorderen freien Stirnseite der Anschlussstutzen 92 bis zu der zugeordneten Clipsöffnung 104 und bildet dementsprechend einen äußeren Zugang zu den Aufnahmen 78, die unterhalb der Isolierlage 90 bzw. den Kontaktblechen 82 miteinander kommunizieren.

Wie Figur 3 des Weiteren verdeutlicht, bildet die Blechabdeckung 110 zwischen den leicht nach oben umbogenen Ansatzbereichen 118 für den umlaufenden Rand 112 eine ebene Anlagefläche aus. Diese Ansatzbereiche 118 bilden dementsprechend eine Art Zentrierung für die an der Blechabdeckung 110 anliegenden Wellrippenelemente 64 (vgl. auch Figur 11).

Der zuvor beschriebene Schichtaufbau 46 ist bei dem gezeigten Ausführungsbeispiel unter Federvorspannung in dem Rahmen 44 gehalten. Hierzu weist der Rahmen 44 durch die beiden Rahmenelemente 48 ausgebildete Federeinbringöffnungen 120 aus, die in den Figuren 4 und 5 zu erkennen sind und bei noch nicht montiertem Zuheizer an der steuerseitigen Stirnseite des Leistungsteils 2 freiliegen. In diese Federeinbringöffnungen 120 sind verspannbare Federelemente 121 eingebracht, die in der auf die Anmelderin zurückgehenden EP 2 298 582 beschrieben sind und ihren Offenbarungsgehalt durch diesen Verweis in die Offenbarung der vorliegenden Anmeldung aufgenommen wird. Unmittelbar benachbart zu diesen Federeinbringöffnungen 120 bildet jedes der Rahmenelemente 48 jeweils ein Halteelementteil 122 aus. Jeder durch ein Rahmenelement 48 gebildete Halteelementteil 122 ist mit einer schrägen Rampenfläche 124 versehen. Die Halteelementteile 122 sind so ausgebildet, dass bei gefügtem Rahmen 44 zwei einem Rahmenelement 48 jeweils zugeordnete Halteelementteile 122 an gegenüberliegenden Endseiten mit den Rahmenelementteilen 122 des anderen Rahmenelementes 48 vollständige Halteelemente 126 ausformen. Diese Halteelemente 126 haben eine zum freien Ende hin zulaufende Ausgestaltung, so dass die schrägen Rampenflächen 24 zur groben Positionierung des Steuerteils 4, namentlich einer Positionieröffnung 127 des Kunststoffgehäuseelementes 10 relativ zu dem Leistungsteil 2 dienen (vgl. Fig. 5). Des Weiteren bilden an den Halteelementteilen 122 quer abgehende Nuten 128 nach dem Fügen der Rahmenelemente 48 eine umfänglich geschlossene Bohrung 130 aus (vgl. Fig. 4). In diese Bohrung 130 ist durch die Befestigungsbohrung 42 der Metallschale 8 eine Befestigungsschraube einbringbar, um die Positionierung und Fixierung des Leistungsteils 2 an dem Steuerteil 4 zur Verwirklichung einer baulichen Einheit von Leistungsteil 2 und Steuerteil 4 zu bewirken.

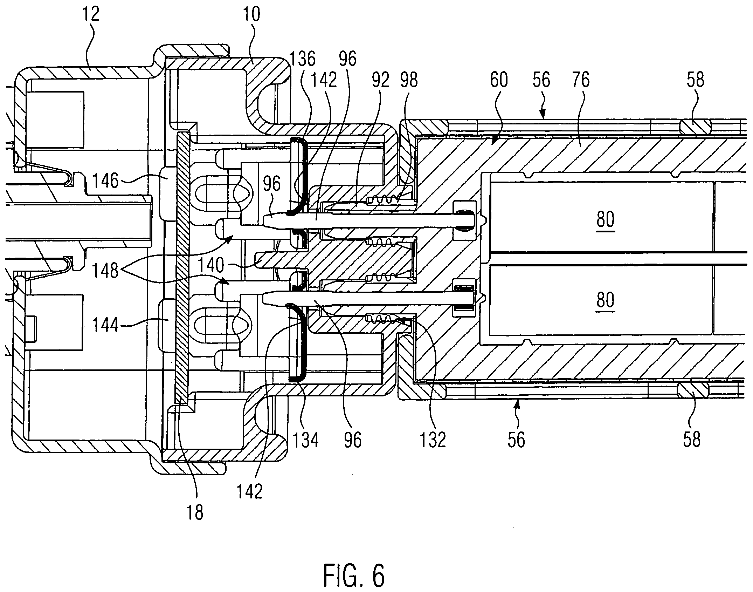

Wie die Figuren 5 und 6 verdeutlichen, bildet das Kunststoffgehäuseelement 10 zu jedem Wärme erzeugenden Element 66 zwei zylindrische Stutzenaufnahmen 132 aus, welche derart angepasst sind, dass die Anschlussstutzen 42 zusammen mit den Dichtelementen 98 jeweils in zugeordnete Stutzenaufnahmen 132 dichtend eingebracht werden können. Wie Figur 6 verdeutlicht, sind die Stutzenaufnahmen 132 endseitig konisch verbreitert und haben zunächst einen verbreiterten Zylinderabschnitt zur Aufnahme des Dichtelementes 98 und einen sich weiter innen befindlichen Zylinderabschnitt mit kleinerem Durchmesser, der mit geringem Spiel den vorne konisch zulaufenden Anschlussstutzen 92 hält und damit die Verformung des Dichtelementes 98 nach der Montage begrenzt.

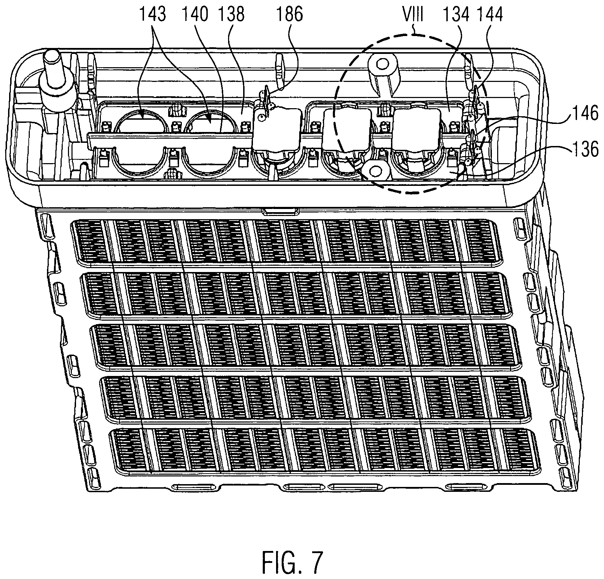

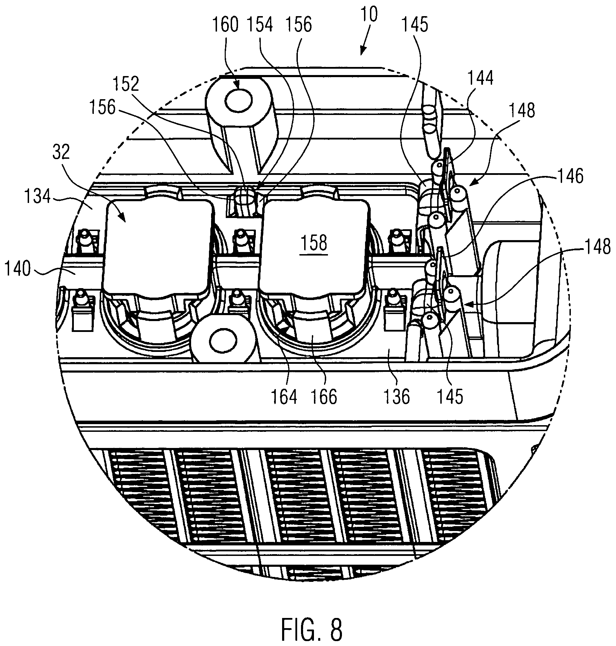

Die Kontaktstifte 96 durchsetzen jeweils Kontaktflächenelemente 134, die durch Stanzen und Biegen aus Blechen geformt sind und innerhalb des Anschlussgehäuses 6 mehrere Kontaktstifte 96 gleicher Polarität gruppieren, so dass diese einer Heizstufe zugeordnet sind. Das in Figur 6 untere Kontaktflächenelement ist ein erstes Plus-Kontaktflächenelement 134, wohingegen das obere Kontaktflächenelement ein Minus-Kontaktflächenelement 136 ist. Wie insbesondere Figur 7 verdeutlicht, nimmt das Kunststoffgehäuseelement 10 ein weiteres, zweites Plus-Kontaktflächenelement 138 auf. Das Minus-Kontaktflächenelement 136 und die Plus-Kontaktflächenelemente 134, 138 sind voneinander über einen Trennsteg 140 getrennt. Dieser Trennsteg 140 überragt eine durch das Kunststoffgehäuseelement ausgeformte Anlageebene für die Kontaktflächenelemente 134, 136, 138. Diese Anlageebene vorgebende Oberflächen des Kunststoffgehäuseelementes 10 sind in Figur 6 mit Bezugszeichen 142 gekennzeichnet. Durch den Steg 140 wird die Kriechstromstrecke zwischen den Kontaktflächenelementen 134, 138 der Plus-Polarität und dem Kontaktflächenelement 136 der Minus-Polarität verlängert, so dass Kriechströme zwischen beiden Kontakten nicht zu befürchten sind. Auch wird die Luftstrecke zwischen den Kontaktflächenelementen 134 und 136 bzw. 138 und 136 verlegt. Die Kontaktflächenelemente 134, 136, 138 haben zwischen den Kontaktstiften 96 sich zu dem Trennsteg 140 öffnende halbkreisförmige Aussparungen 143. In Figur 6 sind jeweils Kontaktzungen 144, 146 zu erkennen, welche die Leiterplatte 18 durchragen und einteilig durch Stanzen und Biegen an den Kontaktflächenelementen 134 und 136 ausgeformt sind und welche in Kontaktzungenhaltebereichen 148 erhaben relativ zu den Anlageflächen 142 gehalten sind. Die Figur 8 lässt Details insofern erkennen. Wie dort verdeutlicht, haben die jeweiligen Kontaktflächenelemente 134, 136 endseitige Verbindungslaschen 145, die in die Kontaktzungen 144, 146 münden. Wie weiterhin aus den Figuren 6 und 8 ersichtlich, haben die Kontaktflächenelemente 134, 136, 138 für die einzelnen Kontaktstifte 96 ausgeformte Kontaktöffnungen, die durch Stanzen und Biegen hergestellt sind. Dementsprechend legen sich aneinander gegenüberliegende Kontaktvorsprünge 150 unter elastischer Dehnung an den Außenumfang der Kontaktstifte 96 an. Wie weiterhin aus Figur 8 ersichtlich, bildet das Kunststoffgehäuseelement 10 Verriegelungsvorsprünge 152 aus, die in Verriegelungsöffnungen 154 der Kontaktflächenelemente 134, 136, 138 eingebracht sind, die an gegenüberliegenden Seiten von scharfkantigen Klemmsegmenten 156 des die Kontaktflächenelemente 134, 136, 138 bildenden Blechmaterials begrenzt sind. Diese Klemmsegmente 156 verkrallen sich dementsprechend an den Verriegelungsvorsprüngen 152 und legen die Kontaktflächenelemente 134, 136, 138 nach dem Aufschieben auf die Verriegelungsvorsprünge fest.

Die Figur 8 zeigt ferner die bereits zuvor beschriebenen Kühlkörper 32, die innerhalb des Kunststoffgehäuseelementes 10 freiliegen und mit einer ebenen Anlagefläche 158 den Trennsteg 140 oberseitig überragen.

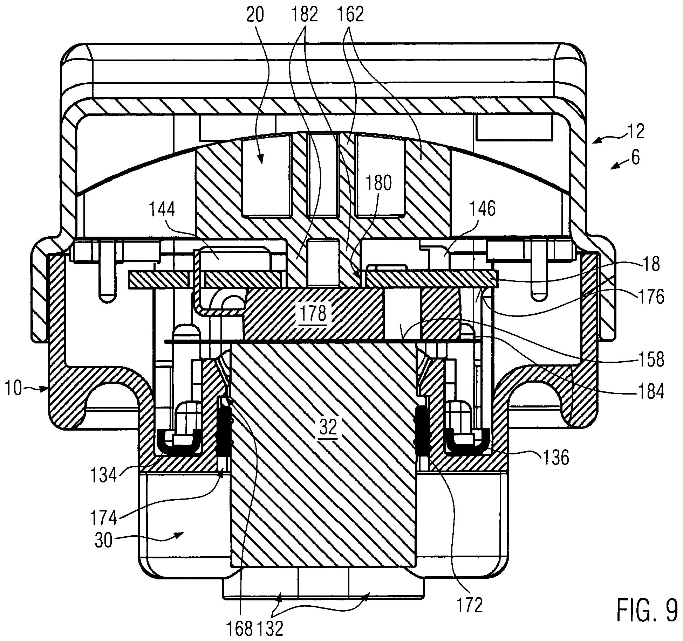

Mittig zwischen den Kühlkörpern 32 und am Rand des Kunststoffgehäuseelementes 10 sind jeweils Befestigungsaugen 160 für das zuvor bereits allgemein eingeführte Druckelement 20 zu erkennen. Wie insbesondere die Figuren 4 und 9 verdeutlichen, ist dieses wabenförmig mit einer Vielzahl von sich rechtwinklig erstreckenden Wabenstegen 162 ausgebildet.

Die Schnittansicht gemäß Figur 9 verdeutlicht den Einbau des Kühlkörpers 32 in das Kunststoffgehäuseelement 10. Dieses hat - wie Figur 8 erkennen lässt - eine Vielzahl von auf dem Umfang einer erhabenen Kühlkörpereinbringöffnung 164 des Kunststoffgehäuseelementes 10 verteilt vorgesehene Rastpfosten 166, die die Kühlkörpereinbringöffnung 164 randseitig konisch verengen und Rastschultern 168 ausformen, welche einen an dem Kühlkörper 32 angeformten umlaufenden Raststeg 170 übergreifen und damit formschlüssig gegen Herausdrücken nach oben und in Richtung auf das Anschlussgehäuse 6 verhindern. Die Kontur der Aussparungen 143 der Kontaktflächenelemente 134, 136, 138 entspricht der Kontur der Kühlkörpereinbringöffnung 164, so dass deren erhabener Rand eng von den Kontaktflächenelementen 134, 136, 138 begrenzt wird. Die beiden Plus-Kontaktflächenelemente 134, 138 sind identisch ausgeformt, so dass sie wahlweise für die Ausbildung des ersten oder des zweiten Kontaktflächenelementes 134 oder 138 verwendet werden können. Auf der der Rastschulter 168 gegenüberliegenden Seite des Raststeges 170 befindet sich ein Dichtelement 172, welches den Kühlkörper 32 umfänglich umgibt und auf der dem Raststeg 170 abgewandten Unterseite in Umfangsrichtung durch in Figur 9 nicht zu erkennende Stege abgestützt ist, so dass das Dichtelement 72 nicht in Richtung auf den Leistungsteil 2 durch eine mit Bezugszeichen 174 gekennzeichnete Abdichtaufnahme hindurchrutschen kann. Diese Abdichtaufnahme 174 wird einstückig durch das Kunststoffgehäuseelement 10 ausgeformt und verlängert die Kühlkörpereinbringöffnung 164.

In Figur 9 ist das Dichtelement in einer nur wenig komprimierten Ausgestaltung gezeigt. Das Dichtelement 172 ist indes in Längsrichtung der Abdichtaufnahme 174 komprimierbar derart, dass die Abdichtung zwischen der Innenumfangsfläche der zylindrischen Abdichtaufnahme 174 und der Außenumfangsfläche des Kühlkörpers 32 verloren geht. Das Dichtelement 172 kann dabei durch Wandern des Raststeges 170 in Längserstreckung der Abdichtaufnahme 174 um etwa 2/10 bis 7/10 mm komprimiert werden. Die Ausgleichsbewegung wird aufgebracht durch Verschrauben des Druckelementes 20 an den Befestigungsaugen 160 nach Montage der Leiterplatte 18, die auf ihrer dem Kühlkörper 32 zugewandten Unterseite 176 mit zwei Halbleiter-Leistungsschaltern 178 versehen ist. Jeder Leistungsschalter 178 liegt auf der ebenen Anlagefläche 158 des zugeordneten Kühlkörpers 32. Auf Höhe des Leistungsschalters 178 hat die Leiterplatte jeweils eine Bohrung 180, welche von Druckstegen 182 des Druckelementes 20 durchragt ist. Diese Druckstege 182 liegen unmittelbar gegen den Leistungsschalter 178 an und drücken diesen gegen den Kühlkörper 32. Da der Leistungsschalter 178 herstellungsbedingt erhebliche Dickentoleranzen haben kann, erlaubt das bei dem Ausführungsbeispiel vorgesehene Dichtelement 172 einen Ausgleich durch Zurückweichen des Kühlkörpers 32 in Richtung auf den Leistungsteil 2 ohne dass die Abdichtung des Kühlkörpers 32 in dem Kunststoffgehäuseelement 10 verloren geht. Wie sich aus der Gesamtschau, insbesondere der Figuren 4 und 9 ergibt, wirkt dabei das Druckelement 20 nach Verschrauben gegen das Kunststoffgehäuseelement 10 auf beide Leistungsschalter 176 und drückt diese jeweils gegen den ihnen zugeordneten Kühlkörper 32. Durch eine auf die Anlagefläche 158 des Kühlkörpers 32 aufgelegte Isolierschicht 184 ist der Leistungsschalter 178 indes von dem zugeordneten Kühlkörper 32 elektrisch isoliert. Bei der Isolierschicht 174 handelt es sich um eine keramische Isolierschicht. Auch diese Isolierschicht 184 überragt den Kühlkörper 32 zur Vergrößerung der Kriechstrecke erheblich in Breitenrichtung (vgl. Figur 9).

Über die Kontaktzungen 144, 146 sind die Kontaktflächenelemente 134, 136 mit der Leiterplatte 18 kontaktiert. Eine zweite, von dem zweiten Kontaktflächenelement 138 abragende Plus-Kontaktzunge 186 (vgl. Figur 4) verbindet den durch das zweite Plus-Kontaktflächenelement 138 und das Minus-Kontaktflächenelement 136 gebildeten Heizkreis mit der Platine 18 (vgl. Figur 4). Wie des Weiteren Figur 9 erkennen lässt, kontaktiert der Halbleiter-Leistungsschalter 178 mit der Leiterplatte 18 und schaltet den Leistungsstrom auf den zugehörigen Schaltkreis. Vorliegend sind zwei Heizstufen realisiert, die jeweils über einen der Halbleiter-Leistungsschalter 178 geschaltet und gesteuert werden können.

### Abgedichteter Kühlkörper

Wie bereits zuvor beschrieben, ist auch der Kühlkörper 32 abgedichtet in der Kühlkörpereinbringöffnung 164 gehalten. Dabei zeigt das Ausführungsbeispiel, konkret Figur 9, eine Situation, bei welcher der Leistungsschalter 178 innerhalb des denkbaren Toleranzbereiches die geringste Dicke hat. In diesem Fall liegen die Raststege 170 unmittelbar unterhalb der Rastschultern 168. Eine Berührung findet indes nicht statt, so dass die durch die wenn auch nur geringfügige Kompression des Dichtelementes 172 bewirkte Kompressionskraft auf die Phasengrenze zwischen dem Kühlkörper 32 und dem Leistungsschalter 178 wirkt. Dieser Leistungsschalter 178 ist unabhängig von der Dickentoleranz jeweils an der Unterseite 176 gegen die Leiterplatte 18 angelegt. Das Druckelement 20 entlastet mit seinen Druckstegen 82 lediglich die Leiterplatte 18, so dass der Leistungsschalter 178 nicht über die Leiterplatte 18, sondern lediglich zwischen dem Druckelement 20 und dem die Vorspannung bewirkenden Kühlkörper 32 unter Zwischenlage der Isolierschicht 184 geklemmt gehalten ist.

Dementsprechend ändert sich die Lage des Leistungsschalter 178 und der Leiterplatte 18 sowie des Druckelementes 20 bei einem Leistungsschalter 178 mit größerer Stärke nicht. Vielmehr wird der Kühlkörper 32 in der Kühlkörpereinbringöffnung 164 in Richtung auf das Leistungsteil 2 gedrängt, so dass das Dichtelement 172 unter Beibehaltung der Abdichtung des Kühlkörpers 32 stärker komprimiert und - gegenüber der Darstellung in Figur 9 - die Raststege 170 in einer weiter abgesenkten Lage, d.h. weiter beabstandet von den Rastschultern 168 angeordnet sind.

### Definierte Anlagestellen für das PTC-Element; Luft- und Kriechstrecke

Das in den Figuren gezeigte Ausführungsbeispiel einer elektrischen Heizvorrichtung hat Wärme erzeugende Elemente, die in besonderer Weise ausgebildet sind, um Kriechstrecken zu verlängern und das Risiko einer Kriechstromübertragung zu vermindern. Diese besondere Gestaltung wird nachfolgend insbesondere unter Bezugnahme auf die Figuren 2 und 11 verdeutlicht. So hat - wie in Figur 2 zu erkennen - jede durch eine im Grunde ebene Innenumfangsfläche des Positionsrahmens 76 vorgegebene Aufnahme 78 an sich gegenüberliegenden Seiten zumindest zwei mit Bezugszeichen 188 gekennzeichneten Vorsprünge definieren innerhalb der Aufnahme 78 Stützstellen für jeweils ein PTC-Element 80. Durch diese Stützstellen 188 wird verhindert, dass die PTC-Elemente 80 unmittelbar an der die Aufnahme 78 vorgebenden glatten Innenwandung des Positionsrahmens 76 anliegen. Somit wird die Kriechstrecke von gegenüberliegenden Oberflächen der PTC-Elemente 80 vergrößert.

Wie insbesondere Figur 2 erkennen lässt, sind die Stützstellen 188 im Wesentlichen pyramidenförmig ausgeformt und haben danach eine spitz zulaufende Ausbildung. Des Weiteren sind die Oberflächen der Stützstellen 188 - wie die Schnittansicht gemäß Figur 11 verdeutlicht - konkav gekrümmt. Auch durch die Krümmung der Oberfläche wird die Kriechstrecke weiter vergrößert. Der bereits zuvor erwähnte und zwischen den Kontaktblechen 82 und dem Positionsrahmen vorgesehene Umfangsspalt 84 trägt ebenfalls zur Vergrößerung der Kriechstrecken bei.

### Besonderer EMV-Schutz des Ausführungsbeispiels

Des Weiteren sind die Wärme erzeugenden Elemente 66 in besonderer Weise EMVgeschützt. So wird der Positionsrahmen 176 im Grunde vollumfänglich von einer Abschirmung umgeben, die einerseits durch die Blechabdeckung 110 des Positionsrahmens 76 und andererseits durch die Blechabdeckung 70 der Wellrippenelemente 64 gebildet sind. Wie Figur 11 verdeutlicht, verbleibt lediglich ein kleiner randseitiger Spalt zwischen den verschiedenen Abdeckungen 70, 110. Ansonsten sind die PTC-Elemente 80 vollständig von einer metallischen Abschirmung umschlossen. Dementsprechend können die Wärme erzeugenden Elemente 66 keine substanzielle elektromagnetische Strahlung abgeben.

Sämtliche Wellrippenelemente 64 sind des Weiteren über an der Metallschale 8 angeformte Rastelemente miteinander verbunden, die in der Zeichnung nicht dargestellt sind, indes so ausgebildet sein können, wie dies die auf die Anmelderin zurückgehende EP 2 299 201 A1 beschreibt, deren Offenbarung insofern in den Offenbarungsgehalt dieser Anmeldung aufgenommen wird. Es kommt lediglich darauf an, dass die Metallschale 8 elektrisch damit verbundene Vorsprünge ausformt, die mit den Wellrippenelemente 64 kontaktieren derart, dass sämtliche Wellrippenelemente 64 mittelbar oder unmittelbar mit der Metallschale 8 elektrisch verbunden und auf Masse gelegt sind.

### Dichtigkeit und Dichtprüfung

Das zuvor diskutiere Ausführungsbeispiel hat Wärme erzeugende Elemente 66, deren Aufnahme 78 hermetisch gegenüber der Umgebung abgedichtet ist, so dass Feuchtigkeit und Verschmutzung nicht zu den PTC-Elementen 80 gelangen kann. Dadurch ist eine hohe Isolation der PTC-Elemente 80 geschaffen, da eventuelle Ladungsträger die Isolation der PTC-Elemente 80, die in die Aufnahme 78 beim Stand der Technik gelangen können, die Isolation beeinträchtigen. Mit der vorliegenden Erfindung sind ferner sämtliche Wärme erzeugenden Elemente 66 dichtend in das Anschlussgehäuse 6 eingesetzt. Üblicherweise wird zur Überprüfung der notwendigen Dichtigkeit nach dem Fügen des Leistungsteils 2 an das Kunststoffgehäuseelement 10 an dessen freien, üblicherweise von dem Gehäusedeckel 12 verschlossenen Ende eine Prüfglocke aufgesetzt, die dichtend an den freien Rand des Kunststoffgehäuseelementes 10 angelegt wird. Über diese Prüfglocke wird der daran angeschlossene Teil der elektrischen Heizvorrichtung unter erhöhtem hydrostatischen Druck gesetzt, beispielsweise durch komprimierte Luft. Es wird ein gewisses Druckniveau gehalten und geprüft, ob dieses durch eventuelle Undichtigkeiten über die Zeit vermindert wird. Sollte dies nicht der Fall sein, wird das Bauteil als gut gewertet.

### Vereinfachte Montage

Dementsprechend wird bei der Herstellung des gezeigten Ausführungsbeispiels zunächst das Leistungsteil 2 separat hergestellt. Zunächst werden die Wärme erzeugenden Elemente 66 montiert. Dabei kann die Blechabdeckung 110 die Unterseite und damit jedenfalls nach dem Aufkleben der der Blechabdeckung 110 zugeordneten Isolierlage 90 den einseitig offenen Positionsrahmen 76 unterseitig verschließen, so dass von der anderen Seite die PTC-Elemente 80 eingelegt und danach das zugeordnete Kontaktblech 82 auf diese aufgelegt werden kann, um schließlich hierauf die Isolierlage 90 aufzulegen und über den Kleberand 88 gegenüber dem Positionsrahmen 76 abzudichten. In der insbesondere unter Bezugnahme auf Figur 11 beschriebenen Weise werden die so vorbereiteten Wärme erzeugenden Elemente 66 in ein Rahmenelement 48 des Rahmens 44 eingelegt, und zwar jeweils alternierend zu der Anordnung von Wellrippenelementen 64. Wie sich insbesondere aus Figur 4 ergibt, liegen üblicherweise zwischen zwei Wärme erzeugenden Elementen 66 jeweils zwei Wellrippenelemente 64 an. Mit anderen Worten liegt an jeder Seite eines Wärme erzeugenden Elementes 66 eine Lage L von Wellrippenelementen an. Der Vergleich zwischen Figur 4 und Figur 11 verdeutlicht ferner, dass bei dem Ausführungsbeispiel nach Figur 4 in einer Lage zumindest zwei Wellrippenelemente 64 angeordnet sind.

Nachdem sämtliche Elemente des Schichtaufbaus 46 in das Rahmenelement 48 eingelegt worden sind, wird der Rahmen 44 durch Auflegen und Verrasten des anderen Rahmenelementes 48 geschlossen. Danach werden über die Federeinbringöffnungen 120 die jeweiligen Federelemente 121 zwischen den Schichtaufbau 46 und einem äußeren Rand der durch den Rahmen 44 geschaffenen Aufnahme 60 eingeschoben. Schließlich werden die Federelemente 121 gegeneinander verspannt, wie dies in der EP 2 298 582 beschrieben ist. Danach wird das so vorbereitete Leistungsteil 2 mit der Metallschale 8 und dem Kunststoffgehäuseelement 10 gefügt. Die Rampenflächen 124 dienen aufgrund ihrer spitz zulaufenden Ausgestaltung dabei als Positionier- und Zentrierhilfen, so dass das Halteelement 126 effektiv in die Positionieröffnung 127 eingebracht werden kann. Das Halteelement 126 ist dabei üblicherweise relativ zu den Kontaktstiften 96 vorlaufend, so dass erst über die Halteelemente 126 eine Grobpositionierung vorgenommen wird und danach die Kontaktstifte 96 in die zylindrischen Aufnahmestutzen 132 eingebracht werden.

### Verbesserte Wärmeübertragung

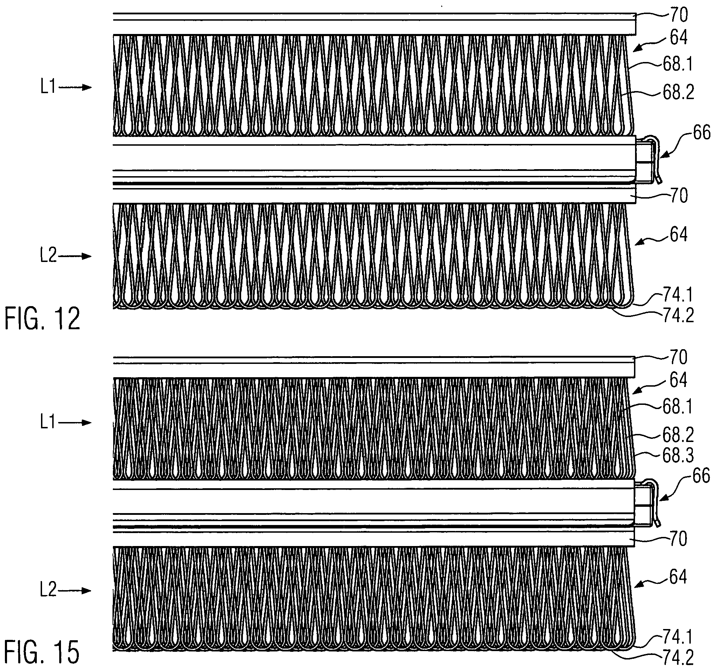

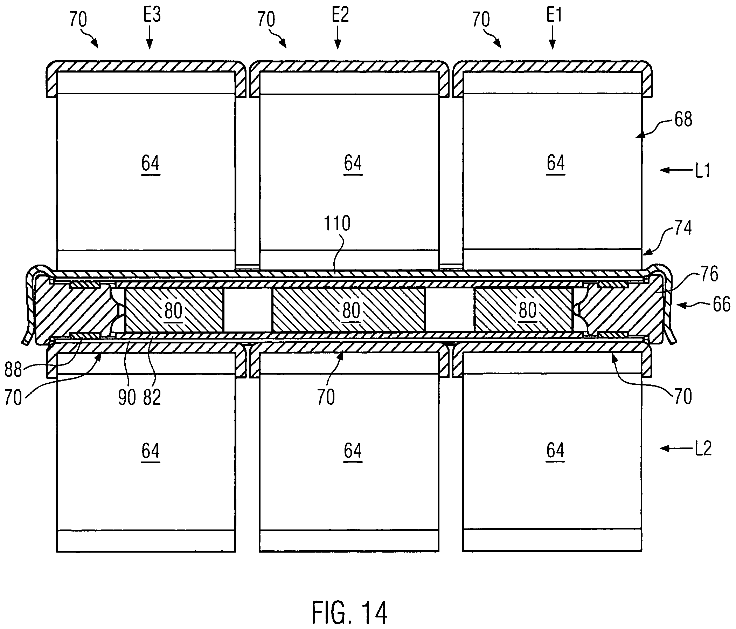

Die Figuren 12 bis 15 verdeutlichen einen weiteren Aspekt der vorliegenden Erfindung, der darin besteht, dass die in einer Lage L in Strömungsrichtung hintereinander vorgesehenen Wellrippenelemente 64 in einer Richtung quer zu der Durchströmungsrichtung S jedoch in ihrer entsprechenden Einbauebene innerhalb des Schichtaufbaus 46 versetzt zueinander vorgesehen sind. Dementsprechend sind in der in Figur 12 gezeigten vergrö-ßerten Seitenansicht eines Heizstabes 62 die mäandrierend gebogenen Blechstreifen 68 der in einer Lage L hintereinander vorgesehenen Wellrippenelemente 64 erkennbar. Diese sind mit Bezugszeichen 68.1 und 68.2 gekennzeichnet und damit unterscheidbar. Es ergibt sich, dass die rechtwinklig zu der Zeichenebene anströmende zu erwärmende Luft nahezu vollständig separate mäandrierend gebogene Blechstreifen 68.1 und 68.2 anströmt. Insbesondere wird das hintere Blechstreifenelement nicht von dem vorderen abgeschattet. Es ergibt sich ein guter Wärmeübergang. Darüber hinaus wird der zu erwärmende Luftstrom S beim Übergang von der ersten Ebene E1 auf die zweite Ebene E2 umgeschichtet, was mit turbulenter Strömung einhergeht, wodurch ebenfalls die Wärmeübertragung verbessert wird.

Die Figuren 13 bis 15 zeigen ein zweites Ausführungsbeispiel entsprechend den Figuren 10 bis 12. Das gezeigte Ausführungsbeispiel eines Heizstabs unterscheidet sich lediglich dadurch von dem zuvor diskutierten Ausführungsbeispiel, dass in einer Lage L1 bzw. L2 drei Wellrippenelemente 64 hintereinander angeordnet sind. Auch dort sind jeweils in einer Ebene E1, E2, E3 angeordnete Wellrippenelemente 64 jeweils streng einem PTC-Element 80 zugeordnet. Wie Figur 15 verdeutlicht, wird die den Heizstab 62 durchströmende Luft mehrfach umgeschichtet. Das durch die jeweils zueinander versetzt vorgesehenen mäandrierenden Blechstreifen 68 gebildete Labyrinth aus Blechstreifen 68.1, 68.2 und 68.3 führt zu einer sehr guten Wärmeübertragung und Leistungsausbeute.

### Modularer Aufbau des Rahmens

Figur 16 zeigt die bereits zuvor beschriebenen Rahmenelemente 48 sowie ein Rahmenzwischenelement 190, das mit weiblichen und männlichen Rastelementen 50, 52 entsprechend den Rahmenelementen 48 versehen ist, so dass das Rahmenzwischenelement 190 auf einfach Weise zwischen den Rahmenelementen 48 verrastet werden kann. Die in dem Rahmen vorgesehene Aufnahme 60 für den Schichtaufbau 46 wird damit um genau diejenige Breite vergrößert, die eine Ebene von Wellrippenelementen 46 beiträgt. Bei den in den Figuren 10 bis 15 gezeigten Ausführungsbeispielen von Heizstäben 62 sind die Wärme erzeugenden Elemente 66 jeweils einheitlich ausgebildet, d.h. ob nun zwei PTC-Elemente 80 in Strömungsrichtung S hintereinander angeordnet sind oder drei PTC-Elemente 80; die PTC-Elemente 80 sind jeweils innerhalb eines einheitlichen Positionsrahmens 76 aufgenommen. Die Wellrippenelemente 64 sind indes identisch. Für die mit drei nebeneinander angeordneten Wellrippenelementen 64 versehenen Heizstäbe 62 und die mit zwei Wellrippenelementen 64 versehenen Heizstäbe 62 kann jeweils ein identisches Kunststoffgehäuseelement 10 verwendet werden. Denn auch das Rahmenzwischenelement 190 hat Halteelementteile 122, die mit den Halteelementteilen 122 eines der Rahmenelemente 48 zusammenwirken, um ein vollständiges Halteelement 126 auszubilden, über welches auch der verbreiterte Rahmen 44 nach Figur 16 mit dem Kunststoffgehäuseelement 10 verbindbar ist. Sollten beispielsweise vier Wellrippenelemente 64 in Strömungsrichtung hintereinander einen Heizstab ausbilden, so kann ein zweites Rahmenzwischenelement 190 in den Rahmen 44 eingebaut werden.

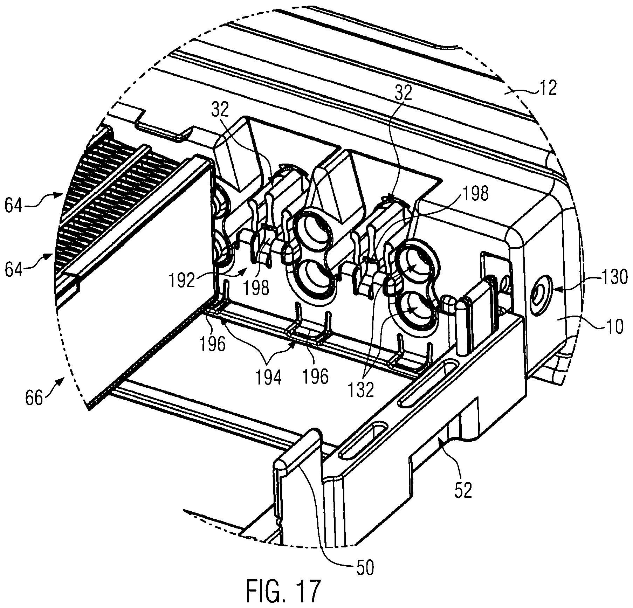

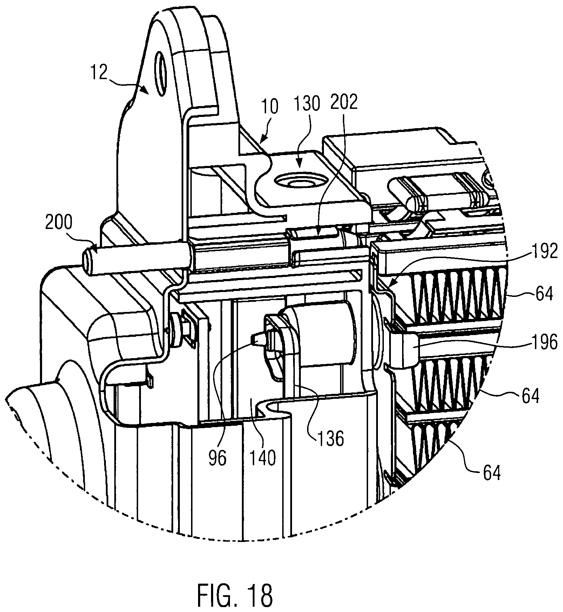

Die Figuren 17 und 18 zeigen ein gegenüber dem zuvor beschriebenen Ausführungsbeispiel leicht abgewandeltes Ausführungsbeispiel. Gleiche Bauteile sind mit gleichen Bezugszeichen gekennzeichnet. Bei dem in den Figuren 17 und 18 gezeigten Ausführungsbeispiel ist insbesondere das zuvor beschriebene Abschirmgehäuseelement 8 abgewandet.

Statt eines schalenförmigen, das Kunststoffgehäuseelement 10 aufnehmenden Gehäuseelementes ist ein Abschirmkontaktblech 192 vorgesehen, welches formschlüssig an äußeren Anlageflächen des Kunststoffgehäuseelementes 10 anliegt. Dieses bildet darüber hinaus Ausbuchtungen 194 aus, in welchen Abschirmkontaktzungen 196 des Abschirmkontaktbleches 192 aufgenommen sind. Die Abschirmkontaktzungen 196 sind jeweils auf Höhe eines Wärme erzeugenden Elementes 66 vorgesehen und kontaktieren den Rand 112 dieses Elementes 66. Ferner bildet das Abschirmkontaktblech 192 durch Stanzen und Biegen ausgeformte Federstege 198 aus, die an der Stirnseite jeweils eines der Kühlkörper 32 anliegen und mit diesem kontaktieren. Wie insbesondere Figur 18 zu entnehmen ist, umgibt das Abschirmkontaktblech 192 eng die zylindrische Stutzenaufnahme 132, die durch das Kunststoffgehäuseelement 10 gebildet wird.

Wie des Weiteren insbesondere aus Figur 18 zu entnehmen ist, weist das in den Figuren 17 und 18 verdeutlichte Ausführungsbeispiel einen auf Masse liegenden Anschlussbolzen 200 auf. Dieser Anschlussbolzen 200 ist beispielsweise durch Umspritzen in dem Kunststoffgehäuseelement 10 gehalten. Das mit dem Kunststoffgehäuseelement 10 verclipste Abschirmkontaktblech 192 bildet eine durch Stanzen und Biegen ausgeformte Bolzenaufnahme 202 aus, die unter elastischer Umfangsspannung an dem Anschlussbolzen 200 elektrisch leitend anliegt.

Es ergibt sich eine vollständige Abschirmung sämtlicher, an der Stromführung beteiligter Elemente des Ausführungsbeispiels. Des Weiteren sind die Kühlkörper 32 über das Abschirmkontaktblech 192 auf Masse gelegt, so dass die zuverlässige elektrische Isolierung zwischen dem Leistungsschalter 178 und dem Kühlkörper 32 durch Überwachen des Massepotentials abgegriffen an dem Anschlussbolzen 200 überprüft werden kann. Ein etwaiger Defekt in der elektrischen Isolierung kann detektiert und ausgegeben werden, um zu verhindern, dass bei Wartungsarbeiten an der elektrischen Heizvorrichtung bei unzureichender elektrischer Isolierung das Wartungspotential einen Stromschlag erleidet.

### Bezugszeichenliste

- 2: Leistungsteil
- 4: Steuerteil
- 6: Anschlussgehäuse
- 8: Abschirmgehäuse/Metallschale
- 10: Kunststoffgehäuseelement
- 12: Gehäusedeckel
- 14: weibliches Leistungssteckergehäuse
- 16: weibliches Steuersteckergehäuse
- 18: Leiterplatte
- 20: Druckelement
- 22: Plusanschlusssteckkontakt
- 24: Minusanschlusssteckkontakt
- 26: Steuerkontaktelement
- 28: Anschlussbolzen/Masse
- 30: Kühlkanal
- 32: Kühlkörper
- 34: Luftdurchtrittskanal
- 36: Durchtrittsöffnung
- 38: Verriegelungsöffnung
- 40: Rastnase
- 42: Befestigungsbohrung
- 44: Rahmen
- 46: Schichtaufbau/Heizblock
- 48: Rahmenelement
- 50: männliches Rastelement
- 52: weibliches Rastelement
- 54: Außenseite des Rahmens
- 56: Öffnung
- 58: Querstrebe
- 60: Aufnahmeraum
- 62: Heizstab
- 64: Wellrippenelement
- 66: Wärme erzeugendes Element
- 68: mäandrierend gebogener Blechstreifen
- 70: Blechabdeckung
- 72: Rand
- 74: freies Ende des Wellrippenelementes des gebogenen Blechstreifens
- 76: Positionsrahmen
- 78: Aufnahme
- 80: PTC-Element
- 82: Kontaktblech
- 84: Umfangsspalt
- 86: Dichtnut
- 88: Kleberand
- 90: Isolierlage
- 92: Anschlussstutzen
- 94: Kanal
- 96: Kontaktstift
- 98: Dichtelement
- 100: weibliche Clipselementaufnahme
- 102: versetzter Vorsprung
- 104: Clipsöffnung
- 106: Clipsöffnung
- 108: Clipssteg
- 110: Blechabdeckung
- 112: Rand
- 114: Randfläche
- 116: Prüfkanal
- 118: Ansatzbereich für den Rand 112
- 120: Federeinbringöffnung
- 121: Federelement
- 122: Halteelementteil
- 124: Rampenfläche
- 126: Halteelement
- 127: Positionieröffnung
- 128: Nut
- 130: Bohrung
- 132: zylindrische Stutzenaufnahme
- 134: erstes Plus-Kontaktflächenelement
- 136: Minus-Kontaktflächenelement
- 138: zweites Plus-Kontaktflächenelement
- 140: Trennsteg
- 142: Anlageflächen der Anlageebene
- 143: Aussparung
- 144: erste Plus-Kontaktzunge
- 145: Verbindungslaschen
- 146: Minus-Kontaktzunge
- 148: Kontaktzungenhaltebereiche
- 150: Kontaktvorsprung
- 152: Verriegelungsvorsprung
- 154: Verriegelungsöffnung
- 156: Klemmsegment
- 158: Anlagefläche
- 160: Befestigungsauge
- 162: Wabenstege
- 164: Kühlkörpereinbringöffnung
- 166: Rastpfosten
- 168: Rastschulter
- 170: Raststeg
- 172: Dichtelement
- 174: Abdichtaufnahme
- 176: Unterseite
- 178: Leistungsschalter
- 180: Bohrung
- 182: Drucksteg
- 184: Isolierschicht
- 186: zweite Plus-Kontaktzunge
- 188: Vorsprünge/Stützstellen
- 190: Rahmenzwischenelement
- 192: Abschirmkontaktblech
- 194: Ausbuchtung
- 196: Abschirmkontaktzunge
- 198: Federsteg
- 200: Anschlussbolzen
- 202: Bolzenaufnahme
- L: Lage
- E: Ebene
- S: Strömungsrichtung

## Patentansprüche

1. Wärme erzeugendes Element (66), insbesondere für eine elektrische Heizvorrichtung eines Kraftfahrzeuges, mit einem Positionsrahmen (76), der eine Aufnahme (78) ausbildet, in der wenigstens ein PTC-Element (80) aufgenommen ist, zwei an gegenüberliegenden Seiten des PTC-Elementes (80) anliegenden Kontaktblechen (82) und einer Abschirmung mit einer mit dem Positionsrahmen (76) verbundenen Abschirm-Blechabdeckung (110), die durch eine Isolierlage (90) elektrisch von dem zugeordneten Kontaktblech (82) getrennt ist,
**dadurch gekennzeichnet,**
**dass** die Abschirm-Blechabdeckung (110) einen den Positionsrahmen (76) im Wesentlichen vollumfänglich umgebenden Rand (112) hat.

2. Wärme erzeugendes Element nach Anspruch 1, **dadurch gekennzeichnet, dass** die Blechabdeckung (110) mit dem Positionsrahmen (76) verclipst ist.

3. Elektrische Heizvorrichtung mit einem Rahmen (44), der an gegenüberliegenden Seiten Öffnungen (56) für den Durchtritt eines zu erwärmenden Mediums ausbildet, und einem in dem Rahmen (44) angeordneten Schichtaufbau (46), der Lagen von Wellrippen- und Wärme erzeugenden Elementen (64; 66) umfasst, wobei das Wärme erzeugende Element (66) wenigstens ein zwischen zwei parallelen Kontaktblechen (82) angeordnetes PTC-Element (80) hat und mit Abschirm-Blechabdeckungen (70, 110) versehen ist, wobei eine der Abschirm-Blechabdeckungen (70) zwischen dem Wellrippenelement (64) und einem der Kontaktbleche (82) des Wärme erzeugenden Elementes (66) an einer Seite angeordnet ist, und die andere Abschirm-Blechabdeckung (110) zwischen dem Wellrippenelement (64) und dem Kontaktblech (82) an der gegenüber liegenden Seite angeordnet und durch eine Isolierlage (90) elektrisch von dem zugeordneten Kontaktblech (82) getrennt ist,
**dadurch gekennzeichnet,**
**dass** die auf der einen Seite vorgesehene Abschirm-Blechabdeckung (110) einen einen Positionsrahmen (76) im Wesentlichen vollumfänglich umgebenden Rand (112) hat, wobei der Positionsrahmen (76) eine Aufnahme (78) ausbildet, in der das wenigstens eine PTC-Element (80) angeordnet ist.

4. Elektrische Heizvorrichtung nach Anspruch 3, **dadurch gekennzeichnet, dass** die auf der einen Seite angeordnete Blechabdeckung (110) dem Wärme erzeugenden Element (66) und die auf der anderen Seite angeordnete Blechabdeckung (70) dem Wellrippenelement (64) zugeordnet ist.

5. Elektrische Heizvorrichtung nach Anspruch 3 oder 4, **dadurch gekennzeichnet, dass** die auf der anderen Seite vorgesehene Blechabdeckung (70) durch ein mit dem Wellrippenelement (64) verbundenes Abdeckelement (70) gebildet ist.

6. Elektrische Heizvorrichtung nach einem der Ansprüche 3 bis 5, **dadurch gekennzeichnet, dass** die auf der anderen Seite vorgesehene Blechabdeckung durch mehrere Abdeckelemente (70) gebildet ist und dass jedes Abdeckelement (70) einem einzigen Wellrippenelement (64) zugeordnet ist.

7. Elektrische Heizvorrichtung nach einem der Ansprüche 3 bis 6, **gekennzeichnet durch** ein Anschlussgehäuse (6), welches an einem stirnseitigen Ende des Schichtaufbaus (46) vorgesehen und mit einem Abschirmgehäuseelement (8) versehen ist, das leitend mit den Blechabdeckungen (110, 70) verbunden ist.

8. Elektrische Heizvorrichtung nach Anspruch 7, **dadurch gekennzeichnet, dass** das Abschirmgehäuseelement (8) als eine ein Kunststoffgehäuseelement (10) aufnehmende Metallschale (18) ausgeformt ist.

9. Elektrische Heizvorrichtung, insbesondere für ein Kraftfahrzeug mit einem Rahmen (44), der an gegenüberliegenden Seiten Öffnungen (56) für den Durchtritt eines zu erwärmenden Mediums ausbildet, einen in dem Rahmen (44) angeordneten Schichtaufbau (46), der Lagen von Wellrippen- und Wärme erzeugenden Elementen (64; 66) umfasst, wobei das Wärme erzeugende Element (66) wenigstens ein zwischen zwei parallelen Kontaktblechen (82) angeordnetes PTC-Element (80) hat, und einem elektrische Kontaktelemente (82) von mehreren Wärme erzeugenden Elementen (66) aufnehmenden abgeschirmten Anschlussgehäuse (6), nach einem der Ansprüche 3 bis 8,
**dadurch gekennzeichnet,**
**dass** das Anschlussgehäuse (6) ein Abschirmgehäuseelement (8), ein in dem Abschirmgehäuseelement (8) aufgenommenes und Funktionsflächen (142, 148) für die Aufnahme einer Steuereinrichtung (4) und/oder den Anschluss der elektrischen Heizvorrichtung ausbildendes Kunststoffgehäuseelement (10) und einen dichtend an das Abschirmgehäuseelement (8) und/oder das Kunststoffgehäuseelement (10) anlegbares Gehäusedeckelelement (12) umfasst.

10. Elektrische Heizvorrichtung nach einem der Ansprüche 3 bis 9, **dadurch gekennzeichnet, dass** das Anschlussgehäuse (6) ein Kunststoffgehäuseelement (10) aufweist, dass die Steuereinrichtung (4) zumindest einen Leistungsschalter (178) und einen dem und einen Leistungsschalter (178) zugeordneten Kühlkörper (32) aufweist und dass das Abschirmgehäuseelement (8) elektrisch leitend mit dem Kühlkörper (32) verbunden ist.

11. Elektrische Heizvorrichtung nach einem der Ansprüche 3 bis 10, **dadurch gekennzeichnet, dass** der Kühlkörper (32) dichtend und in Grenzen beweglich in dem Kunststoffgehäuseelement (10) gehalten ist

12. Elektrische Heizvorrichtung nach einem der Ansprüche 3 bis 11, **gekennzeichnet durch** einen in dem Kunststoffgehäuseelement (10) gehaltenen Anschlussbolzen (200), der elektrisch leitend mit dem Abschirmgehäuseelement (8) verbunden ist.

13. Elektrische Heizvorrichtung nach einem der Ansprüche 3 bis 12, **gekennzeichnet durch** eine an dem Anschlussgehäuse (6) zur dichtenden Aufnahme eines von dem Wärme erzeugenden Element (66) abragenden Anschlussstutzens (92) ausgebildete Stutzenaufnahme (132).

## Claims

1. Heat generating element (66),
in particular for an electric heating device of a motor vehicle, with a positioning frame (76) forming a receptacle (78) in which at least one PTC element (80) is received, two contact plates (82) resting against opposite sides of the PTC element (80), and a shield with a shielding sheet metal plate cover (110) connected to the positioning frame (76), which is electrically separated from the associated contact plate (82) by an insulating layer (90),
**characterized in that**
the shielding sheet metal plate cover (110) has a rim (112) substantially completely surrounding the positioning frame (76).

2. The heat generating element according to claim 1, **characterized in that** the sheet metal cover (110) is clipped to the positioning frame (76).

3. An electric heating device comprising a frame (44) forming openings (56) on opposite sides for the passage of a medium to be heated, and a layered structure (46) disposed in the frame (44) and comprising layers of corrugated fin and heat generating elements (64; 66), wherein the heat generating element (66) has at least one PTC element (80) disposed between two parallel contact sheets (82) and shielding sheet metal plate covers (70, 110) are provided, wherein one of the shielding sheet metal plate covers (70) is disposed between the corrugated fin member (64) and one of the contact sheets (82) of the heat generating member (66) on one side, and the other shielding sheet metal plate cover (110) is disposed between the corrugated fin member (64) and the contact sheet (82) on the opposite side and is protected by an insulating layer (90) and electrically isolated from the associated contact plate (82),
**characterized in that** the shielding sheet metal plate cover (110) provided on one side has a rim (112) substantially completely surrounding a positioning frame (76), the positioning frame (76) forming a receptacle (78) in which the at least one PTC element (80) is arranged.

4. Electrical heating device according to claim 3, **characterized in that** the sheet metal plate cover (110) arranged on one side is associated with the heat generating element (66) and the sheet metal plate cover (70) arranged on the other side is associated with the corrugated fin element (64).

5. Electrical heating device according to one of claims 3 or 4, **characterized in that** the sheet metal plate cover provided on the other side is formed by a cover element (70) connected with the corrugated fin element (64).

6. Electrical heating device according to one of claims 3 to 5, **characterized in that** the sheet metal plate cover provided on the other side is formed by several cover elements (70) and that each cover element (70) is associated with a single corrugated fin element (64).

7. Electrical heating device according to one of claims 3 to 6, **characterized by** a connection housing (6) which is provided at a front end of the layered structure (46) and is provided with a shielding housing element (8) which is conductively connected to the sheet metal plate covers (110, 70).

8. Electrical heating device according to claim 7, **characterized in that** the shielding housing element (8) is formed as a metal tray (18) receiving a plastic housing element (10).

9. Electrical heating device, in particular for a motor vehicle, with a frame (44) which forms openings (56) on opposite sides for the passage of a medium to be heated, a layered structure (46) which is arranged in the frame (44) and contains layers of corrugated fins and heat-generating elements (64); 66), said heat generating element (66) having at least one PTC element (80) disposed between two parallel contact plates (82), and a shielded connection housing receiving electrical contact elements (82) of a plurality of heat generating elements (66) according to any one of claims 3 to 8, **characterized in that** the connection housing (6) comprises a shielding housing element (8), a plastic housing element (10) which is accommodated in the shielding housing element (8) and forms functional surfaces (142, 148) for accommodating a control device (4) and/or for connecting the electrical heating device, and a housing cover element (12) which can be placed in a sealing manner against the shielding housing element (8) and/or the plastic housing element (10).

10. Electrical heating device according to one of claims 3 to 9, **characterized in that** the connection housing (6) has a plastic housing element (10), that the control device (4) has at least one power switch (178) and a cooling body (32) assigned to the power switch (178), and that the shielding housing element (8) is connected in an electrically conductive manner to the cooling body (32).

11. Electrical heating device according to one of claims 3 to 10, **characterized in that** the cooling body (32) is held in the plastic housing element (10) in a sealing manner and so as to be movable within limits.

12. Electrical heating device according to one of claims 3 to 11, **characterized by** a connecting bolt (200) held in the plastic housing element (10), which is electrically conductively connected to the shielding housing element (8).

13. Electrical heating device according to any one of claims 3 to 12, **characterized by** a socket holder (132) formed on the connection housing (6) for sealingly receiving a connection socket (92) projecting from the heat-generating element (66).

## Revendications

1. Élément générateur de chaleur (66),
en particulier pour un dispositif de chauffage électrique d'un véhicule automobile, avec un cadre de positionnement (76) formant un logement (78) dans lequel est reçu au moins un élément CTP (80), deux plaques de contact (82) s'appuyant sur des côtés opposés de l'élément CTP (80), et un blindage avec un couvercle en tôle de blindage (110) relié au cadre de positionnement (76), qui est séparé électriquement de la plaque de contact (82) associée par une couche isolante (90),
**caractérisé en ce que**
le couvercle en tôle de blindage (110) comporte un bord (112) qui entoure sensiblement complètement le cadre de positionnement (76).

2. Elément générateur de chaleur selon la revendication 1, **caractérisé en ce que** le couvercle en tôle (110) est clipsé sur le cadre de positionnement (76).

3. Dispositif de chauffage électrique comprenant un cadre (44) formant des ouvertures (56) sur des côtés opposés pour le passage d'un milieu à chauffer, et une structure en couches (46) disposée dans le cadre (44) et comprenant des couches d'éléments formants des ailettes ondulées et des éléments générateurs de chaleur (64 ; 66), où l'élément générateur de chaleur (66) comporte au moins un élément CTP (80) disposé entre deux plaques de contact parallèles (82) et comporte des couvercles en tôle de blindage (70, 110), où l'un des couvercles en tôle de blindage (70) est disposé entre l'élément à ailettes ondulées (64) et l'une des plaques de contact (82) de l'élément générateur de chaleur (66) sur un côté, et l'autre couvercle en tôle de blindage (110) est disposé entre l'élément à ailettes ondulées (64) et la plaque de contact (82) sur le côté opposé et est électriquement isolé de la plaque de contact associée (82) par une couche d'isolation (90),
**caractérisé en ce que** le couvercle en tôle de blindage (110) prévu sur un côté présente un rebord (112) entourant sensiblement complètement un cadre de positionnement (76), où le cadre de positionnement (76) forme un réceptacle (78) dans lequel est disposé l'au moins un élément CTP (80).

4. Dispositif de chauffage électrique selon la revendication 3, **caractérisé en ce que** le couvercle en tôle (110) disposé sur un côté est associé à l'élément générateur de chaleur (66) et le couvercle en tôle (70) disposé sur l'autre côté est associé à l'élément à ailettes ondulées (64).

5. Dispositif de chauffage électrique selon la revendication 3 ou 4, **caractérisé en ce que** le couvercle en tôle (70) prévu sur l'autre côté est formé par un élément de couvercle (70) relié à l'élément à ailettes ondulées (64).

6. Dispositif de chauffage électrique selon l'une des revendications 3 à 5, **caractérisé en ce que** le couvercle en tôle prévu sur l'autre côté est formé par une pluralité d'éléments de couvercle (70) et que chaque élément de couvercle (70) est associé à un seul élément à ailettes ondulées (64).

7. Dispositif de chauffage électrique selon l'une des revendications 3 à 6, **caractérisé par** un boîtier de raccordement (6) qui est prévu à une extrémité de la structure en couches (46) et qui est muni d'un élément de boîtier de blindage (8) qui est relié de manière conductrice aux couvercles en tôle (110, 70).

8. Dispositif de chauffage électrique selon la revendication 7, **caractérisé en ce que** l'élément de boîtier de blindage (8) est formé comme une coque métallique (18) recevant un élément de boîtier en plastique (10).

9. Dispositif de chauffage électrique, en particulier pour un véhicule automobile comprenant un cadre (44) formant des ouvertures (56) sur des côtés opposés pour le passage d'un milieu à chauffer, une structure en couches (46) disposée dans le cadre (44) comprenant des couches d'éléments formants des ailettes ondulées et des éléments générateurs de chaleur (64 ; 66), où l'élément générateur de chaleur (66) comporte au moins un élément CTP (80) disposé entre deux plaques de contact parallèles (82) et comporte des couvercles en tôle de blindage (70, 110), et un boîtier de raccordement (6) blindé recevant des éléments de contact électriques de plusieurs éléments générateurs de chaleur (66) selon l'une des revendication 3 à 8,
**caractérisé en ce que**
**caractérisé en ce que** le boîtier de raccordement (6) comprend un élément de boîtier de blindage (8), un élément de boîtier en matière plastique (10) qui est logé dans l'élément de boîtier de blindage (8) et qui forme des surfaces fonctionnelles (142, 148) pour recevoir un appareil de commande (4) et/ou pour raccorder le dispositif de chauffage électrique, et un élément de couvercle de boîtier (12) qui peut être placé de manière étanche contre l'élément de boîtier de blindage (8) et/ou l'élément de boîtier en matière plastique (10).

10. Dispositif de chauffage électrique selon l'une des revendications 3 à 9, **caractérisé en ce que** le boîtier de raccordement (6) présente un élément de boîtier (10) en matière plastique, **en ce que** le dispositif de commande (4) présente au moins un interrupteur de puissance (178) et un corps de refroidissement (32) associé à l'interrupteur de puissance (178), et **en ce que** l'élément de boîtier de blindage (8) est relié de manière électriquement conductrice au corps de refroidissement (32).

11. Dispositif de chauffage électrique selon l'une des revendications 3 à 10, **caractérisé en ce que** le corps de chauffe (32) est maintenu dans l'élément de boîtier en plastique (10) de manière étanche et mobile dans certaines limites.

12. Dispositif de chauffage électrique selon l'une des revendications 3 à 11, **caractérisé par** un boulon de raccordement (200) maintenu dans l'élément de boîtier en plastique (10), qui est relié de manière électriquement conductrice à l'élément de boîtier de blindage (8).

13. Dispositif de chauffage électrique selon l'une quelconque des revendications 3 à 12, **caractérisé par** un logement de pièce de raccordement (132) formé sur le boîtier de raccordement (6) pour recevoir de manière étanche une pièce de raccordement (92) faisant saillie de l'élément générateur de chaleur (66).
